# EUROPÄISCHE PATENTSCHRIFT

(11) **EP 4 361 491 B1**
(45) Veröffentlichungstag und Bekanntmachung des Hinweises auf die Patenterteilung: **24.09.2025**
(21) Anmeldenummer: 23202019.8
(22) Anmeldetag: 06.10.2023
(51) Int. Cl.: F16P 3/10, E05B 47/00

(54) **SCHUTZTÜRÜBERWACHUNGSMODUL**
PROTECTIVE DOOR MONITORING MODULE
MODULE DE SURVEILLANCE DE PORTE DE PROTECTION

(30) Priorität: 28.10.2022 DE 102022128727
(43) Veröffentlichungstag der Anmeldung: 01.05.2024
(73) Patentinhaber: Pilz GmbH & Co. KG, 73760 Ostfildern (DE)
(72) Erfinder: Bauer, Sven, 73760 Ostfildern (DE); Rink, Joachim, 73760 Ostfildern (DE); Veit, Andreas, 73760 Ostfildern (DE)
(74) Vertreter: Witte, Weller & Partner Patentanwälte mbB

(56) Entgegenhaltungen:
- EP-A1- 4 080 102
- US-A1- 2022 262 186

## Beschreibung

Die vorliegende Erfindung betrifft ein Schutztürüberwachungsmodul mit einem Grundgerät zur Überwachung eines Zustands einer Schutztür.

Gemäß einem weiteren Aspekt betrifft die vorliegende Erfindung eine Schutztür mit einem Schutztürüberwachungsmodul der oben genannten Art, wobei das Grundgerät an einem ersten Teil der Schutztür und ein Betätiger an einem zweiten Teil der Schutztür angeordnet ist, wobei der erste Teil und der zweite Teil der Schutztür bei einem Öffnen der Schutztür voneinander getrennt werden.

Gemäß einem weiteren Aspekt betrifft die vorliegende Erfindung ein Schutztürüberwachungssystem mit einer Schutztür als Zugang zu einem Sicherheitsbereich, einem Schutztürüberwachungsmodul der oben genannten Art, und einer Steuerungseinheit, welche dazu eingerichtet ist, das Schutztürsignal auszulesen und eine im Sicherheitsbereich befindliche Maschine oder Anlage in Abhängigkeit des Schutztürsignals zu steuern.

Schutztürüberwachungsmodule der oben genannten Art werden häufig auch als Sicherheitsschalter bezeichnet. Beispielhafte Schutztürüberwachungsmodule bzw. Sicherheitsschalter der eingangs genannten Art sind aus der DE 10 2005 057 108 A1, der DE 103 05 704 B3, der DE 10 2008 060 004 A1 und aus der DE 10 2020 120 817 A1 bekannt.

Gattungsgemäße Schutztürüberwachungsmodule werden an Schutztüren, Schutzklappen und dergleichen eingesetzt. Wenngleich vorliegend die Begriffe "Schutztürüberwachungsmodul" und "Schutztür" verwendet werden, kann das erfindungsgemäße Schutztürüberwachungsmodul an jeglicher Art von trennender Schutzeinrichtung zum Einsatz kommen. Der Begriff "Schutztür" ist im vorliegenden Sinne dementsprechend weit aufzufassen. Anstelle des allgemeinen Begriffs "trennende Schutzeinrichtung" wird daher im Folgenden ausschließlich der Begriff "Schutztür" verwendet, ohne dass dies eine Beschränkung des Schutzbereichs zur Folge haben soll.

Schutztüren, an denen das erfindungsgemäße Schutztürüberwachungsmodul bspw. zum Einsatz kommen kann, dienen typischerweise als Zugang zu einem Sicherheitsbereich, in dem sich eine automatisiert arbeitende Maschine oder Anlage befindet. Bei der Maschine kann es sich bspw. um einen Roboter, eine Werkzeugmaschine mit schnelldrehender Spindel, eine Transport- oder Förderanlage, eine Presse oder eine andere Maschine oder Anlage handeln, von deren Betrieb eine Gefahr für Personen ausgeht, die sich in dem genannten Sicherheitsbereich bzw. im Arbeitsbereich der Maschine befinden. Das Schutztürüberwachungsmodul kann als Meldegerät dienen, mit dessen Hilfe eine Steuerungseinheit den geschlossenen Zustand der Schutztür erkennen kann. Die Steuerungseinheit ist dazu eingerichtet, das von dem Schutztürüberwachungsmodul erzeugte Schutztürsignal auszulesen und die Maschine in Abhängigkeit des Schutztürsignals zu steuern. Beispielsweise ist ein Betreiben der Maschine nur bei Vorhandensein des Schutztürsignals möglich. Die Steuerungseinheit ist also mit anderen Worten dazu eingerichtet, ein Betreiben der Maschine oder Anlage nur dann zu ermöglichen, wenn sie das Schutztürsignal von dem Schutztürüberwachungsmodul empfängt, d.h. wenn die Schutztür geschlossen ist. Wird die Schutztür hingegen im laufenden Betrieb geöffnet (sofern möglich), muss die Steuerungseinheit die Maschine oder Anlage in einen gefahrlosen Zustand bringen, in dem bspw. die Stromversorgung zu der Maschine oder Anlage abgeschaltet wird.

Es gibt eine Vielzahl von Maschinen und Anlagen, von denen auch nach dem Abschalten noch für eine gewisse Zeit eine Gefahr ausgeht, bspw. weil die Maschine oder Anlage noch ausläuft. Für derartige Anwendungsfälle werden Schutztürüberwachungsmodule benötigt, die ein Öffnen der Schutztür so lange verhindern, bis die Maschine oder Anlage ihren gefahrlosen Zustand erreicht hat. Diese Funktion wird als Zuhaltung bezeichnet.

Klassischerweise besitzen Schutztürüberwachungsmodule der vorliegenden Art einen sog. Betätiger und eine als Gegenstück dazu fungierende Betätigeraufnahme. Die Betätigeraufnahme ist Teil eines Grundgeräts, in dem typischerweise weitere elektronische Bauteile untergebracht sind und von dem meist die Anschlussleitungen ausgehen, die das Schutztürüberwachungsmodul mit der Steuerungseinheit verbinden. Dementsprechend ist das Grundgerät mit der Betätigeraufnahme vorzugsweise an einem unbeweglichen Teil der Schutztür (z.B. an einer Türzarge) angeordnet, während der Betätiger vorzugsweise an einem beweglichen der Schutztür (z.B. an einem beweglichen Türflügel) angeordnet ist. Dies hat den Vorteil, dass der Teil des Schutztürüberwachungsmoduls, der an dem beweglichen Teil der Schutztür angeordnet ist, nicht mit Strom versorgt werden muss, da in der Regel nur das Grundgerät des Schutztürüberwachungsmoduls mit Strom versorgt werden muss.

Bei geschlossener Schutztür greift der Betätiger in die Betätigeraufnahme, was mit Hilfe eines oder mehrerer Sensoren detektiert wird. Bei einem Schutztürüberwachungsmodul mit Zuhaltung wird der Betätiger außerdem in der Betätigeraufnahme gegen ein Zurückziehen blockiert bzw. verriegelt. Die sog. Zuhaltung weist daher vorzugsweise eine Verriegelungseinrichtung zum Verriegeln des Betätigers in der Betätigeraufnahme auf.

In dem letztgenannten Fall erfüllt das Schutztürüberwachungsmodul also zwei Funktionen, nämlich einerseits eine Detektionsfunktion, mit dessen Hilfe die Schließposition der Schutztür detektiert wird, und andererseits eine Zuhaltefunktion, die ein Öffnen der Schutztür so lange verhindert, wie der Betätiger in der Betätigeraufnahme verriegelt ist. Die Freigabe des Betätigers kann bspw. über einen elektromotorischen Aktor erfolgen, der von der Steuerungseinheit betätigt wird, sobald die überwachte Maschine oder Anlage ihren sicheren Zustand eingenommen hat.

Ein Schutztürüberwachungsmodul dieser Art wird von der Anmelderin unter dem Namen PSENmlock vertrieben. Dieses Schutztürüberwachungsmodul funktioniert einwandfrei und ist vielseitig einsetzbar. Ist der Betätiger des Schutztürüberwachungsmoduls im Wesentlichen stab- bzw. stiftförmig und die als Gegenstück dazu fungierende Betätigeraufnahme als durchgängige Nut, als U-förmige Öffnung oder als Sack- oder Durchgangsloch ausgestaltet, in welche bzw. welches der stab- bzw. stiftförmige Betätiger eingeführt wird, so ergibt sich aus dieser Art der Formgestaltung ein relativ hohes Potential für Verletzungen, da insbesondere der Betätiger formbedingt verletzungsgefährlich ist. Zum anderen müssen Betätiger und Betätigeraufnahme relativ exakt zueinander ausgerichtet werden, da der stab- bzw. stiftförmige Betätiger ansonsten nicht exakt die Position der zugehörigen durchgängigen Nut, der zugehörigen U-förmigen Öffnung, des zugehörigen Sacklochs oder des zugehörigen Durchgangslochs trifft und damit nicht in diese bzw. dieses einführbar ist.

In der DE 10 2020 120 817 A1 ist ein Schutztürüberwachungsmodul beschrieben, welches aufgrund eines ringförmigen Betätigerelements verglichen mit einem stab- bzw. stiftförmigen Betätiger erhöhte Flexibilität in Bezug auf unterschiedliche Einbausituationen bietet.

Trotzdem muss je nach Einbausituation die Position und Ausrichtung des Betätigers aus vorgenannten Gründen relativ zu der Betätigeraufnahme angepasst werden. Die Einbausituation kann beispielsweise durch den Typ der Schutztüre (z.B. Schwenkschutztür oder Schiebeschutztür), durch die räumliche Ausrichtung des unbeweglichen Teils der Schutztür und des beweglichen Teils der Schutztür relativ zueinander und/oder durch den verfügbaren Bauraum an dem beweglichen bzw. unbeweglichen Teil der Schutztüre etc. charakterisiert sein.

Zudem besteht die Möglichkeit einer Fehlmontage, bei der ein Benutzer das Schutztürüberwachungsmodul derart einbaut, dass Betätiger und Betätigeraufnahme bei gleicher räumlicher Position so räumlich zueinander ausgerichtet sind, dass sich der Betätiger nicht in die Betätigeraufnahme einführen lässt.

Die US 2022/0262186 A1 offenbart eine Schaltvorrichtung, die Schaltmittel beherbergt, die dazu geeignet sind, betriebsmäßig mit einem oder mehreren Stromkreisen der Anlage verbunden zu werden, eine Betätigungsvorrichtung, die mit den Schaltmitteln beim Öffnen/Schließen des Zugangs interagiert, und eine Druckknopfstation, die mit einem oder mehreren Steuerelementen versehen ist, die dazu bestimmt sind, auf einen oder mehrere Stromkreise der Anlage einzuwirken. Das Druckknopffeld umfasst ein Gehäuse, das mit den Bedienelementen und Mitteln zur Verankerung am festen Teil des Zugangs versehen ist, die so angepasst sind, dass das Gehäuse um eine Drehachse gedreht werden kann, um ihre Ausrichtung in Bezug auf die Schaltvorrichtung und/oder auf Steuer- und/oder Signalschaltkreise zu ändern.

Es ist daher eine Aufgabe der vorliegenden Erfindung, ein Schutztürüberwachungsmodul bereitzustellen, welches in Bezug auf unterschiedliche Einbausituationen für einen Benutzer einfach und flexibel handhabbar ist und eine Fehlmontage verhindert.

Diese Aufgabe wird durch ein Schutztürüberwachungsmodul gemäß Anspruch 1 gelöst, das ein Grundgerät zur Erzeugung eines Schutztürsignals aufweist, welches eine Betätigeraufnahme zur Aufnahme eines Betätigers aufweist und dazu eingerichtet ist, ein Schutztürsignal zu erzeugen, wenn der Betätiger in die Betätigeraufnahme des Grundgeräts eingeführt ist, wobei das Grundgerät eine Achse und eine quer zu der Achse angeordnete erste Stirnseite mit einer ersten Schnittstelle aufweist. Das Schutztürüberwachungsmodul weist ferner einen Montagewinkel mit einer zweiten Schnittstelle auf, welche dazu ausgebildet ist, in einer ersten Position, einer zu der ersten Position um die Achse des Grundgeräts im Uhrzeigersinn um 90° rotierten zweiten Position und einer zu der zweiten Position um die Achse des Grundgeräts im Uhrzeigersinn um 90° rotierten dritten Position mit der ersten Schnittstelle des Grundgeräts gekoppelt zu sein. Der Montagewinkel weist eine Montageseite auf, welche quer zu der zweiten Schnittstelle des Montagewinkels angeordnet ist. Die erste Schnittstelle und die zweite Schnittstelle weisen eine mechanische Sperreinrichtung auf, welche dazu ausgebildet ist, eine Kopplung der ersten Schnittstelle mit der zweiten Schnittstelle in einer zu der dritten Position um die Achse des Grundgeräts im Uhrzeigersinn um 90° rotierten vierten Position zu verhindern. Die Betätigeraufnahme ist dazu ausgebildet, einen Betätiger in einer ersten Richtung aufzunehmen und auch in einer zu der ersten Richtung um die Achse des Grundgeräts entgegen dem Uhrzeigersinn um 90° rotierten zweiten Richtung aufzunehmen und auch in einer zu der zweiten Richtung um die Achse des Grundgeräts entgegen dem Uhrzeigersinn um 90° rotierten dritten Richtung aufzunehmen. In der ersten Position ist die Montageseite orthogonal zu der ersten Richtung. In der zweiten Position ist die Montageseite orthogonal zu der zweiten Richtung ist und in der dritten Position ist die Montageseite orthogonal zu der dritten Richtung..

Vorteilhaft an der vorliegenden Erfindung ist, dass ein Benutzer (z.B. ein Monteur) bei verschiedenen Einbausituationen das Schutztürüberwachungsmodul einfach und flexibel montieren kann. Ein und dasselbe Grundgerät kann mit Hilfe des Montagewinkels je nach vorliegender Einbausituation in verschiedenen räumlichen Ausrichtungen zu einer Montagefläche an einer Schutztür ausgerichtet und befestigt werden. Beispielsweise ist der Montagewinkel in einer ersten Position, einer zweiten Position oder einer dritten Position mit dem Grundgerät gekoppelt und an einer Montagefläche bzw. Schutztür (z.B. eine Türzarge) befestigt, sodass die Betätigeraufnahme den Betätiger aufnehmen kann.

Gleichzeitig wird vorteilhafterweise eine Fehlmontage des Grundgeräts in Bezug auf eine nicht für die Aufnahme des Betätigers geeignete Ausrichtung des Grundgeräts vermieden, indem der Montagewinkel sich nur in den vorgegebenen Positionen an dem Grundgerät befestigen lässt und somit auch das Grundgerät nur in vorgegebenen Ausrichtungen relativ zu einer Montagefläche bzw. an einer Schutztür befestigt werden kann. Eine ungünstige Ausrichtung des Schutztürüberwachungsmoduls relativ zu einer Montagefläche, bei der der Betätiger nicht oder nur schlecht in die Betätigeraufnahme eingreifen kann, wird vermieden, indem das Grundgerät und der Montagewinkel eine mechanische Sperreinrichtung aufweisen. Die mechanische Sperreinrichtung verhindert, dass der Montagewinkel in der vierten Position mit dem Grundgerät gekoppelt werden kann.

Erfindungsgemäß weist der Montagewinkel eine Montageseite auf, welche quer zu der zweiten Schnittstelle des Montagewinkels angeordnet ist, wobei die Betätigeraufnahme dazu ausgebildet ist, einen Betätiger aus einer ersten Richtung, aus einer zu der ersten Richtung um die Achse des Grundgeräts entgegen dem Uhrzeigersinn um 90° rotierten zweiten Richtung und aus einer zu der zweiten Richtung um die Achse des Grundgeräts entgegen dem Uhrzeigersinn um 90° rotierten dritten Richtung aufzunehmen, und wobei in der ersten Position die Montageseite orthogonal zu der ersten Richtung ist, in der zweiten Position die Montageseite orthogonal zu der zweiten Richtung ist und in der dritten Position die Montageseite orthogonal zu der dritten Richtung ist.

Mit anderen Worten ist die Betätigeraufnahme des Grundgeräts dazu ausgebildet, den Betätiger aus drei verschiedenen Richtungen aufzunehmen, wobei die erste Richtung, die zweite Richtung und die dritte Richtung nacheinander um 90° um die Längsachse des Grundgeräts entgegen dem Uhrzeigersinn zueinander rotiert sind. Wenn sich der Montagewinkel in der ersten Position oder in der dritten Position befindet, verläuft die erste Richtung, in welcher der Betätiger aufgenommen werden kann, jeweils orthogonal zu der Montageseite. Befindet sich der Montagewinkel hingegen in der zweiten Position, so verläuft die zweite Richtung, in welcher der Betätiger aufgenommen werden kann, orthogonal zu der Montageseite.

Für eine Montage des Schutztürüberwachungsmoduls an einer Schutztür bzw. Montagefläche kann die Montageseite des Montagewinkels parallel zu der Schutztür bzw. der Montagefläche ausgerichtet sein.

Vorzugsweise hat der Montagewinkel einen im Wesentlichen L-förmigen Querschnitt.

Gemäß einer weiteren Ausgestaltung weist die mechanische Sperreinrichtung ein mechanisches Sperrelement und eine Aussparung auf, wobei eine der beiden Schnittstellen das mechanische Sperrelement aufweist und die andere Schnittstelle die Aussparung aufweist, welche dazu ausgebildet ist, jeweils in der ersten Position, der zweiten und der dritten Position das mechanische Sperrelement aufzunehmen und die vierte Position zu verhindern.

In anderen Worten wirken die Aussparung und das mechanische Sperrelement ähnlich wie eine Nut und eine Passfeder zusammen. In der vierten Position kann das mechanische Sperrelement nicht in die Aussparung eingreifen, sodass eine Kopplung des Grundgeräts mit dem Montagewinkel in der vierten Position verhindert wird. Dahingegen kann das mechanische Sperrelement jeweils in der ersten Position, in der zweiten und in der dritten Position in die Aussparung eingreifen.

Es versteht sich, dass der Montagewinkel zu einem Zeitpunkt nur in einer Position mit dem Grundgerät gekoppelt sein kann. Anders ausgedrückt kann der Montagewinkel nicht in zwei Positionen gleichzeitig mit dem Grundgerät gekoppelt sein.

Die mechanische Sperreinrichtung hat den Vorteil, dass eine Kopplung des Montagewinkels mit dem Grundgerät in der vierten Position vermieden wird. Die vierte Position ist eine ungeeignete Position. Mit einer ungeeigneten Position ist eine Orientierung von dem Montagewinkel bezüglich des Grundgeräts gemeint, bei welcher das Grundgerät im montierten Zustand an einer Schutztür bzw. einer Montagefläche so orientiert ist, dass ein Betätiger nicht oder nur schlecht in die Betätigeraufnahme eingreifen kann.

Die mechanische Sperreinrichtung fungiert daher als Fehlmontage-Sicherung. Dies wirkt sich positiv auf den Montagevorgang des Schutztürüberwachungsmoduls an einer Schutztür bzw. einer Montagefläche aus, da der Benutzer hinsichtlich Überlegungen im Zusammenhang mit der Montage entlastet wird und zeitintensive Umbauten, welche sich einer Fehlmontage anschließen, vermieden werden.

Beispielsweise kann die eine Schnittstelle drei räumlich voneinander getrennte Aussparungen aufweisen, welche jeweils dazu ausgebildet sind, das mechanische Sperrelement in einer bestimmten Position des Montagewinkels aufzunehmen. Anders ausgedrückt ist gemäß diesem Beispiel eine erste Aussparung dazu ausgebildet, das mechanische Sperrelement in der ersten Position aufzunehmen, eine zweite Aussparung ist dazu ausgebildet, das mechanische Sperrelement in der zweiten Position aufzunehmen, und eine dritte Aussparung ist dazu ausgebildet, das mechanische Sperrelement in der dritten Position aufzunehmen. Da in der vierten Position das mechanische Sperrelement nicht aufgenommen werden kann, kann der Montagewinkel nicht in der vierten Position mit dem Grundgerät gekoppelt werden.

In einer bevorzugten Ausgestaltung weist der Montagewinkel das mechanische Sperrelement und das Grundgerät die korrespondierende Aussparung auf. Gleichermaßen ist es möglich, dass das Grundgerät das mechanische Sperrelement und der Montagewinkel die Aussparung aufweist.

Gemäß einer weiteren Ausgestaltung ist die Aussparung eine um die Achse des Grundgeräts mit weniger als 360° umlaufende Aussparung.

Die mit weniger als 360° umlaufende Aussparung hat gegenüber dem oben genannten Beispiel mit räumlich voneinander getrennten Aussparungen den Vorteil, dass der Montagewinkel (stufenlos) beispielsweise von der ersten Position in die zweite Position und/oder von der zweiten Position in die dritte Position rotiert werden kann, ohne dass der Montagewinkel parallel zu der Achse des Grundgeräts axial verschoben werden muss. Dies bewirkt eine einfache und komfortable Montage des Schutztürüberwachungsmodul für den Benutzer.

Ein weiterer Vorteil der weniger als 360° umlaufende Aussparung ist, dass der Montagewinkel ohne axiale Bewegung in eine Richtung parallel zu der Achse des Grundgeräts nicht mehrfach vollständige Drehungen um die Achse des Grundgeräts ausführen kann. Dies wirkt sich insbesondere auch dann vorteilhaft, wenn das Schutztürüberwachungsmodul einen Stecker aufweist. Ist der Stecker mit dem Grundgerät über elektrische Anschlüsse verbunden, so sollten diese elektrischen Anschlüsse, wie beispielsweise Litzen oder Kabel, davor geschützt werden, mehrfach verdreht zu werden. Ansonsten könnten die elektrischen Anschlüsse sonst beschädigt werden könnten oder sogar abreißen.

Vorzugsweise weist die Aussparung einen Winkelbereich größer 180° auf.

Gemäß einer weiteren Ausgestaltung weist das Grundgerät und/oder der Montagewinkel eine erste Axialsicherung auf, welche den Montagewinkel entlang der Achse des Grundgeräts axial sichert.

Dies hat den Vorteil, dass ein Benutzer während der Montage den Montagewinkel nicht manuell axial sichern muss. Dies wirkt sich vereinfachend auf den Montagevorgang aus. Insbesondere kann ein Benutzer den Montagewinkel von einer Position in eine andere Position drehen, ohne den Montagewinkel axial in einer Richtung parallel zu der Achse des Grundgeräts manuell zu sichern, beispielsweise von der ersten Position in die zweite Position und/oder von der zweiten Position in die dritte Position.

Gemäß einer weiteren Ausgestaltung weist das Grundgerät eine lösbar befestigte Seitenwand auf, welche einen Teil der ersten Axialsicherung aufweist.

Mit anderen Worten weist das Grundgerät eine Seitenwand auf, welche von dem Grundgerät gelöst und wieder an diesem befestigt werden kann, und zumindest ein Teil der ersten Axialsicherung ist an dieser Seitenwand angeordnet.

Diese Ausgestaltung hat insbesondere den Vorteil, dass die erste Axialsicherung nur gelöst werden kann, wenn die lösbar befestigte Seitenwand von dem Grundgerät gelöst ist. Dies kann sich positiv auf den Montagevorgang auswirken, da ein Benutzer automatisch den Montagewinkel und das Grundgerät zusammen benutzt bzw. "in der Hand hält", und daher beispielsweise den Montagewinkel nicht "verlieren" kann.

Ferner kann ein unerwünschter Zugang zu dem Grundgerät über die erste Schnittstelle begrenzt werden, indem nur autorisierte Benutzer die lösbar befestigte Seitenwand des Grundgeräts lösen bzw. befestigen können oder ein unautorisierter Zugang optisch erkennbar ist. Beispielsweise können ein oder mehrere Schrauben, welche die lösbar befestigten Seitenwand an dem Grundgerät befestigen, mit Sicherungslack gesichert sein.

Gemäß einer weiteren Ausgestaltung weist der Montagewinkel eine Montageseite auf, welche quer zu der zweiten Schnittstelle des Montagewinkels angeordnet ist, wobei das Grundgerät ein erstes Durchgangsloch und ein orthogonal zu dem ersten Durchgangsloch verlaufendes zweites Durchgangsloch aufweist, und wobei in der ersten Position und der dritten Position das erste Durchgangsloch orthogonal zu der Montageseite verläuft und in der zweiten Position das zweite Durchgangsloch orthogonal zu der Montageseite verläuft.

Mit anderen Worten verläuft eine Längsachse des ersten Durchgangslochs orthogonal zu der Montageseite des Montagewinkels, wenn der Montagewinkel in der ersten Position an das Grundgerät gekoppelt ist. Mit Längsachse eines Durchgangslochs ist die Achse gemeint, entlang welcher sich das Durchgangsloch erstreckt bzw. entlang welcher das Durchgangsloch gefertigt (z.B. gebohrt) wurde bzw. entlang welcher ein Befestigungsmittel aufgenommen werden kann. Ist der Montagewinkel in der zweiten Position an das Grundgerät gekoppelt, so verläuft eine Längsachse des zweiten Durchgangslochs orthogonal zu der Montageseite. Ist der Montagewinkel in der dritten Position an das Grundgerät gekoppelt, so verläuft wieder die Längsachse des ersten Durchgangslochs orthogonal zu der Montageseite.

Das erste Durchgangsloch und das zweite Durchgangsloch sind jeweils dazu ausgebildet, ein Befestigungsmittel aufzunehmen. Daher kann das Schutztürüberwachungsmodul mittels eines Befestigungsmittels, welches entweder von dem ersten Durchgangsloch oder dem zweiten Durchgangsloch aufgenommen ist, an der Schutztür bzw. Montagefläche befestigt sein. Dies hat den Vorteil, dass das Schutztürüberwachungsmodul eine weitere Befestigungsstelle an einer der Schutztür bzw. Montagefläche aufweist - zusätzlich zu der Befestigungsstelle an der Montageseite des Montagewinkels. Dadurch kann die mechanische Stabilität der Verbindung von Grundgerät mit der Montagefläche bzw. der Schutztür verbessert werden. Vorzugsweise weist das Befestigungsmittel eine Schraube auf.

Gemäß einer weiteren Ausgestaltung weist der Montagewinkel eine Montageseite auf, welche quer zu der zweiten Schnittstelle des Montagewinkels angeordnet ist, wobei das Grundgerät eine erste Seitenfläche, eine zweite Seitenfläche und eine dritte Seitenfläche aufweist, welche im Wesentlichen quer zu der ersten Stirnseite angeordnet sind, und wobei die Montageseite des Montagewinkels in der ersten Position mit der ersten Seitenfläche fluchtet oder parallel zu dieser ist, in der zweiten Position mit der zweiten Seitenfläche fluchtet oder parallel zu dieser ist und in der dritten Position mit der dritten Seitenflächen fluchtet oder parallel zu dieser ist.

Diese Ausgestaltung hat insbesondere den Vorteil, dass jeweils in der ersten Position, der zweiten Position und der dritten Position eine der Seitenfläche des Grundgeräts parallel zu der Montageseite der Montagewinkels ist oder mit dieser fluchtet. Ist die Montageseite mit einer Schutztür bzw. einer Montagefläche verbunden, so ist auch eine der Seitenflächen des Grundgeräts parallel zu der Schutztür bzw. Montagefläche oder fluchtet mit dieser. Liegt das Grundgerät an der Schutztür bzw. Montagefläche an, so kann sich dies positiv auf die mechanische Stabilität des Schutztürüberwachungsmoduls auswirken.

Mit dem Begriff "quer" ist vorliegende nicht zwangsläufig senkrecht oder orthogonal gemeint. Stattdessen umfasst "quer" jede Ausrichtung unter einem beliebigen Winkel (auch 90°), außer einer parallelen Ausrichtung.

Gemäß einer weiteren Ausgestaltung weist die erste Schnittstelle einen Stecker auf, welcher dazu ausgebildet ist, Strom und/oder elektrische Signale zu übertragen, und wobei die zweite Schnittstelle eine erste Aufnahme aufweist, welche dazu ausgebildet ist, den Stecker aufzunehmen.

Mittels des Steckers kann beispielsweise das Grundgerät mit Strom versorgt werden. Ebenso können beispielsweise Steuerungssignale zwischen dem Schutztürüberwachungsmodul und einer Steuerungseinheit übertragen werden.

Die Anordnung des Steckers an der ersten Schnittstelle hat insbesondere den Vorteil, dass der Stecker jeweils in der ersten Position, der zweiten Position und in der dritten Position zugänglich ist. Mit zugänglich ist gemeint, dass der Stecker bzw. die erste Schnittstelle nicht von der Schutztür bzw. Montagefläche verdeckt sind. Auch kann vorteilhafterweise der Montagewinkel zusätzlich gleichzeitig als Steckerhalter fungieren. Es ist jedoch denkbar, dass der Stecker an einer anderen Stelle mit dem Grundgerät verbunden ist.

Gemäß einer weiteren Ausgestaltung weist der Stecker und/oder der Montagewinkel eine Verdrehsicherung auf, welche dazu ausgebildet ist, den Stecker rotatorisch in Bezug auf die Achse des Grundgeräts in der ersten Aufnahme sichert.

Die Verdrehsicherung hat insbesondere den Vorteil, dass ein oder mehrere elektrische Anschlüsse wie z.B. Kabel, welche den Stecker mit dem Grundgerät elektrisch verbinden können, in einer Position gehalten werden und nicht aufgrund einer ungewollten Rotation des Steckers um die Achse des Grundgeräts verdreht werden können. Beispielsweise könnte in einem an einer Schutztür bzw. Montagefläche montierten Zustand des Schutztürüberwachungsmoduls (und insbesondere des Montagewinkels) durch mehrfache Rotation des Steckers elektrische Anschlüsse beschädigt werden. Die Verdrehsicherung wirkt sich daher positiv auf die Sicherheit und Zuverlässigkeit des Schutztürüberwachungsmodul aus.

Andererseits bewirkt die Verdrehsicherung ein Mitdrehen des Steckers mit dem Montagewinkel, wenn der Montagewinkel von einer Position in eine andere Position gedreht wird. Mit anderen Worten ist die Ausrichtung von dem Stecker zu dem Montagewinkel in Drehrichtung um die Achse des Grundgeräts festgesetzt. Beispielsweise auch dann, wenn der Montagewinkel von der ersten Position über die zweite Position in die dritte Position gedreht wird.

Vorzugsweise weist die erste Aufnahme des Montagewinkels eine Innenkontur und der Stecker eine dazu korrespondieren Außenkontur auf, wobei die Innenkontur und die Außenkontur den Stecker rotatorisch im Bezug die Achse des Grundgeräts in der ersten Aufnahme sichern.

Besonders bevorzugt weist der Stecker einen Steckerkopf mit einer Außenkontur auf und die erste Aufnahme des Montagewinkels eine dazu korrespondierende Innenkontur auf, sodass ein Drehen des Steckers um die Längsachse des Grundgeräts verhindert wird.

Vorteilhafterweise weist die Verdrehsicherung ferner eine Positionierungseinrichtung auf, welche die Aufnahme des Steckers in der ersten Aufnahme des Montagewinkels in nur einer bestimmten Position zulässt.

Dies bewirkt, dass der Stecker relativ zu dem Montagewinkel stets gleich ausgerichtet ist, insbesondere in der ersten Position, der zweiten Position und der dritten Position. Ist der Stecker mit einem Anschlussstecker verbunden, so hat diese Ausgestaltung insbesondere den Vorteil, dass auch der Anschlussstecker stets gleich relativ zu dem Montagewinkel orientiert angeordnet sein kann. Dies ist insbesondere auch dann von Vorteil, wenn der Anschlussstecker sich nur in einer bestimmten Ausrichtung zu dem Stecker mit dem Stecker verbinden lässt. Dies ist auch dann von Vorteil, wenn der Anschlussstecker einen gewissen räumlichen Bedarf aufweist und nur in bestimmten Ausrichtungen relativ zu der Schutztür bzw. der Montagefläche ausgerichtet sein kann oder sollte.

Beispielsweise ist der Stecker im Wesentlichen zylinderförmig und weist eine abgeflachte Zylindermantelfläche auf, wobei die erste Aufnahme des Montagewinkels eine dazu korrespondierende Innenkontur aufweist.

Gemäß einer weiteren Ausgestaltung weist der Stecker und/oder der Montagewinkel eine zweite Axialsicherung auf, welche den Stecker in der ersten Aufnahme entlang der Achse des Grundgeräts axial sichert.

Vorzugsweise weist der Stecker einen Körper mit einem Kopf auf, wobei die erste Aufnahme den Körper des Steckers aufnimmt und der Kopf des Steckers entlang der Achse des Grundgeräts mit einem Rastelement des Montagewinkels verrastet.

Vorzugsweise weist die zweite Axialsicherung ein Gewinde und eine Mutter auf. Beispielsweise weist der Stecker eine Zylinder-Form mit einem Gewinde auf, wobei eine Mutter auf das Gewinde aufgeschraubt ist, welche den Stecker axial entlang der Achse des Grundgeräts an dem Montagewinkel befestigt.

Gemäß einer weiteren Ausgestaltung weist die erste Schnittstelle eine Vielzahl von zweiten Aufnahmen auf und die zweite Schnittstelle weist eine Vielzahl von dritten Aufnahmen auf, wobei jeweils mindestens eine der Vielzahl von dritten Aufnahmen in der ersten Position, der zweiten Position und der dritten Position mit einer der Vielzahl von zweiten Aufnahmen der ersten Schnittstelle fluchtet, und wobei die Vielzahl von zweiten Aufnahmen und die Vielzahl von dritten Aufnahmen jeweils dazu ausgebildet sind, ein Befestigungsmittel zum Koppeln der ersten Schnittstelle mit der zweiten Schnittstelle aufzunehmen.

Diese Ausgestaltung hat den Vorteil einer Positionierungshilfe für den Benutzer. Damit ist gemeint, dass der Benutzer beim Ausrichten des Montagewinkels relativ zu dem Grundgerät jeweils in die erste Position, die zweite Position und die dritte Position unterstützt wird. Dies kann sich positiv auf den Montagevorgang auswirken, indem dem Benutzer die geeigneten Positionen vereinfacht aufgezeigt werden und der Benutzer somit hinsichtlich Überlegungen zu der Montage entlastet werden kann.

Insbesondere bei einer Ausgestaltung mit einer weniger als 360° um die Achse des Grundgeräts umlaufenden Aussparung ist ein stufenloser Übergang zwischen der ersten Position, der zweiten Position und der dritten Position ineinander möglich. Insbesondere bei dieser Ausgestaltung können miteinander fluchtende zweite Aufnahmen und dritte Aufnahmen dem Benutzer die erste Position, die zweite Position und die dritte Position aufzeigen.

In einer bevorzugten Ausgestaltung weist die erste Schnittstelle vier zweiten Aufnahmen und die zweite Schnittstelle vier dritten Aufnahmen auf, wobei die zweiten Aufnahmen und die dritten Aufnahmen auf Eckpunkten eines Quadrats angeordnet sind.

Vorzugsweise weist das Befestigungsmittel eine Schraube auf. Beispielsweise ist der Montagewinkel mit vier Schrauben an dem Grundgerät befestigt, wobei die erste Schnittstelle vier zweite Aufnahmen und die zweite Schnittstelle vier dritte Aufnahmen aufweist, wobei jeweils eine zweite und eine dazu korrespondierende dritte Aufnahme eine Schraube aufnimmt. Mit anderen Worten verlaufen die Längsachsen der vier Schrauben jeweils parallel zu einer Längsachse einer zweiten und einer je nach Position dazu korrespondierenden dritten Aufnahme. Es versteht sich, dass dies für die erste Position, die zweite Position und die dritte Position gilt, wobei der Montagewinkel zu einem Zeitpunkt nur in einer Position sein kann.

Gemäß einer weiteren Ausgestaltung weist der Montagewinkel eine Montageseite auf, welche quer zu der zweiten Schnittstelle des Montagewinkels angeordnet ist, und die Montageseite des Montagewinkels weist eine vierte Aufnahme auf, welche dazu ausgebildet ist, ein Befestigungsmittel zum Befestigen des Montagewinkels an einer Montagefläche aufzunehmen.

Vorzugsweise weist das Befestigungsmittel eine Schraube auf, mit welcher die Montageseite des Montagewinkels an einer Schutztür bzw. an einer Montagefläche befestigt werden kann.

Gemäß einer weiteren Ausgestaltung weist der Stecker ein Poka-Yoke-Element auf.

Das Poka-Yoke-Element hat den Vorteil, dass ein Anschlussstecker nur in einer bestimmten Ausrichtung relativ zu dem Stecker mit dem Stecker verbunden werden kann. Dies wirkt sich positiv auf den Montagevorgang aus, da so Fehlmontagen verhindert werden können. Ein weiterer Vorteil ist, dass das Poka-Yoke-Element verhindern kann, dass ein Anschlussstecker verbunden werden kann, welcher zum Verbinden mit dem Schutztürüberwachungsmodul nicht geeignet ist.

Wie eingangs bereits erwähnt, betrifft ein weiterer Aspekt der vorliegenden Erfindung eine Schutztür, an der ein erfindungsgemäßes Schutztürüberwachungsmodul montiert ist. Die oben genannten und in den abhängigen Ansprüchen definierten Ausgestaltungsmöglichkeiten beziehen sich äquivalent auch auf die Schutztür mit dem erfindungsgemäßen Schutztürüberwachungsmodul.

Die Schutztür weist vorzugsweise einen ersten Teil, an dem das Grundgerät des Schutztürüberwachungsmoduls angeordnet ist, sowie einen zweiten Teil, an dem der Betätiger des Schutztürüberwachungsmoduls angeordnet ist, auf. Die beiden Teile der Schutztür werden bei einem Öffnen der Schutztür voneinander getrennt. Der Betätiger befindet sich daher nur in geschlossenem Zustand der Schutztür in der Betätigeraufnahme des Grundgeräts.

Vorzugsweise handelt es sich bei dem ersten Teil der Schutztür, an dem das Grundgerät angeordnet ist, um einen unbewegten Teil der Schutztür (z.B. um einen Türrahmen oder eine Türzarge). Äquivalent dazu handelt es sich bei dem zweiten Teil der Schutztür, an dem der Betätiger angeordnet ist, vorzugsweise um ein bewegliches Türelement (z.B. ein Türflügel). Die Anordnung des Grundgeräts an dem unbewegten Teil der Schutztür hat den Vorteil, dass eine Stromversorgung des am beweglichen Teil der Schutztür montierten Teils des Schutztürüberwachungsmoduls unterbleiben kann, da typischerweise nur das Grundgerät des Schutztürüberwachungsmoduls mit Strom versorgt werden muss.

Wie eingangs ebenfalls bereits erwähnt, betrifft ein weiterer Aspekt der vorliegenden Erfindung ein Schutztürüberwachungssystem, welches eine Schutztür der zuvor genannten Art (inklusive erfindungsgemäßem Schutztürüberwachungsmodul), einen Betätiger und eine Steuerungseinheit aufweist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine schematische Darstellung eines Schutztürüberwachungssystems gemäß einem Ausführungsbeispiel der vorliegenden Erfindung;
- Fig. 2A: eine perspektivische Ansicht einer Schutztür mit einem Schutztürüberwachungsmodul gemäß einem Ausführungsbeispiel der vorliegenden Erfindung;
- Fig. 2B: eine Front-Ansicht der in Fig. 2A gezeigten Schutztür;
- Fig. 2C: eine Seitenansicht der in Fig. 2A und Fig. 2B gezeigten Schutztür;
- Fig. 3: eine Explosionsdarstellung eines Schutztürüberwachungsmoduls gemäß einem Ausführungsbeispiel der vorliegenden Erfindung;
- Fig. 4: eine perspektivische Ansicht des in Fig. 3 gezeigten Schutztürüberwachungsmoduls;
- Fig. 5: eine perspektivische Ansicht des in Fig. 3 und Fig. 4 gezeigten Schutztürüberwachungsmoduls zur schematischen Veranschaulichung einer Bewegung eines Montagewinkels;
- Fig. 6A: eine perspektivische Ansicht des in Fig. 3-5 gezeigten Schutztürüberwachungsmoduls mit dem Montagewinkel in der ersten Position;
- Fig. 6B: eine perspektivische Ansicht des in Fig. 3-5 gezeigten Schutztürüberwachungsmoduls mit dem Montagewinkel in der zweiten Position;
- Fig. 6C: eine perspektivische Ansicht des in Fig. 3-5 gezeigten Schutztürüberwachungsmoduls mit dem Montagewinkel in der dritten Position;
- Fig. 7: eine perspektivische Ansicht eines Montagewinkels gemäß einem Ausführungsbeispiels der vorliegenden Erfindung;
- Fig. 8A: eine perspektivische Ansicht einer an dem Schutztürüberwachungsmodul angeordneten ersten Schnittstelle gemäß einem Ausführungsbeispiel der vorliegenden Erfindung;
- Fig. 8B: eine perspektivische Ansicht der an dem Schutztürüberwachungsmodul angeordneten ersten Schnittstelle gemäß einem alternativen Ausführungsbeispiel der vorliegenden Erfindung;
- Fig. 9: eine Schnittdarstellung des in Fig. 3-5 gezeigten Schutztürüberwachungsmoduls;
- Fig. 10: eine perspektivische Ansicht eines Steckers gemäß einem Ausführungsbeispiel der vorliegenden Erfindung;
- Fig. 11: eine Explosionsdarstellung des Montagewinkels und des Steckers gemäß einem Ausführungsbeispiel der vorliegenden Erfindung;
- Fig. 12A: eine perspektivische Ansicht des Montagewinkels gemäß einem weiteren Ausführungsbeispiel der vorliegenden Erfindung; und
- Fig. 12B: eine perspektivische Ansicht des Montagewinkels gemäß noch einem weiteren Ausführungsbeispiel der vorliegenden Erfindung.

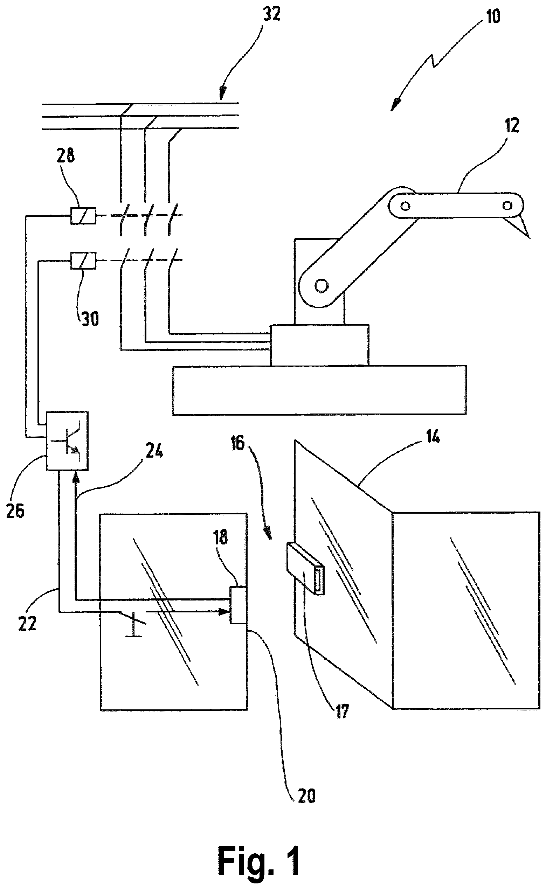

Fig. 1 zeigt eine schematische Ansicht eines Ausführungsbeispiels eines erfindungsgemäßen Schutztürüberwachungssystems. Das Schutztürüberwachungssystem ist darin in seiner Gesamtheit mit der Bezugsziffer 10 bezeichnet.

Das Schutztürüberwachungssystem 10 beinhaltet hier einen Roboter 12, dessen Arbeitsbereich mit Hilfe einer Schutztür 14 abgesichert ist. An der Schutztür 14 ist ein Schutztürüberwachungsmodul 16 gemäß der vorliegenden Erfindung angeordnet. Das Schutztürüberwachungsmodul 16 umfasst ein Türteil 17, welches an dem beweglichen Türelement (Türflügel) der Schutztür 14 angeordnet ist, und ein Rahmenteil 18, das an einem unbeweglichen zweiten Teil 20 der Schutztür 14 angeordnet ist. In dem dargestellten Ausführungsbeispiel handelt es sich bei dem unbeweglichen zweiten Teil 20 der Schutztür 14 um einen Türrahmen bzw. eine Türzarge. In anderen Ausführungsbeispielen kann dieser zweite unbewegliche Teil 20 der Schutztür 14 auch ein zweiter Türflügel einer zweiteiligen Schutztür sein.

Das Rahmenteil 18 des Schutztürüberwachungsmoduls 16 ist über zwei Leitungen 22, 24 mit einem Sicherheitsschaltgerät 26 verbunden. Das Sicherheitsschaltgerät 26 ist bspw. ein Sicherheitsschaltgerät aus der Reihe PNOZ<^{®}>, das von der Anmelderin der vorliegenden Erfindung vertrieben wird. Es handelt sich hierbei um ein mehrkanaligredundantes Sicherheitsschaltgerät, das dazu ausgebildet ist, die Ausgangssignale von Meldegeräten, wie dem Schutztürüberwachungsmodul 16, auszuwerten und in Abhängigkeit davon einen elektrischen Verbraucher abzuschalten. Der elektrische Verbraucher ist in diesem Fall der Roboter 12. Dementsprechend steuert das Sicherheitsschaltgerät 26 zwei Schütze 28, 30 an, deren Arbeitskontakte in der Verbindung zwischen einer Stromversorgung 32 und dem Roboter 12 angeordnet sind.

Alternativ zu dem Sicherheitsschaltgerät 26 könnte das Schutztürüberwachungsmodul 16 auch an eine programmierbare Sicherheitssteuerung angeschlossen sein, wie sie von der Anmelderin der vorliegenden Erfindung unter der Bezeichnung PSS<^{®}> vertrieben wird. Das Sicherheitsschaltgerät 26 wird daher nachfolgend allgemein als Steuerungseinheit 26 des Schutztürüberwachungssystems 10 bezeichnet, ohne dadurch auf eine spezielle Ausgestaltung dieser Steuerungseinheit beschränkt zu sein. Im Folgenden werden mehrere Ausführungsbeispiele des erfindungsgemäßen Schutztürüberwachungsmoduls 16 beschrieben. Gleiche oder äquivalente Bauteile werden dabei mit den gleichen Bezugszeichen bezeichnet.

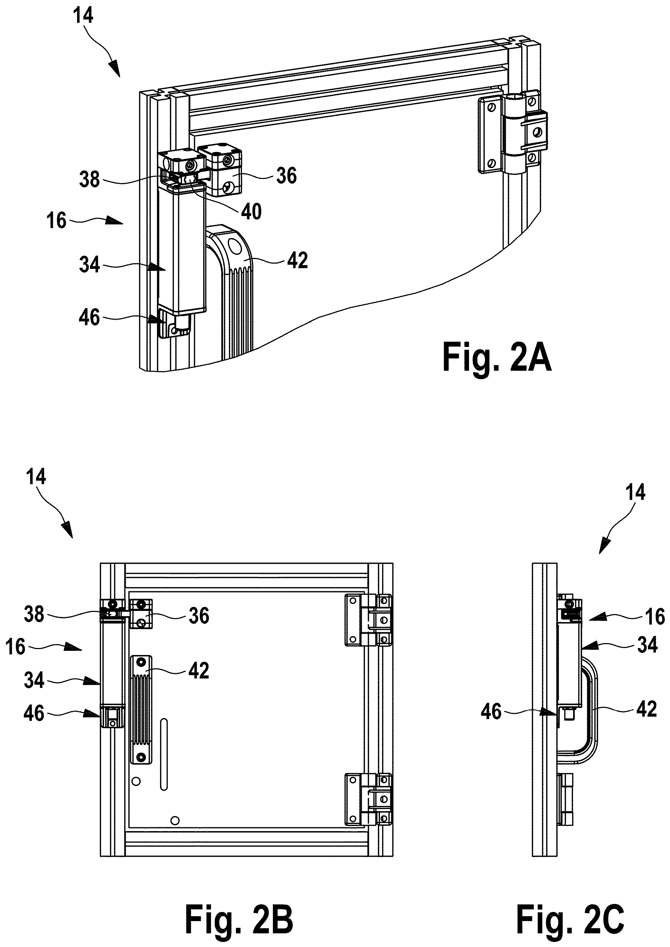

Fig. 2A-2C zeigen ein Ausführungsbeispiel der Schutztür 14 mit dem daran montierten Schutztürüberwachungsmodul 16 gemäß einem Ausführungsbeispiel in verschiedenen Ansichten. Fig. 2A zeigt die Schutztür 14 in einer perspektivischen Ansicht in einer geschlossenen Stellung. Fig. 2B zeigt die geschlossene Schutztür 14 in einer Front-Ansicht und Fig. 2C die geschlossene Schutztür 14 in einer Seitenansicht.

Das Schutztürüberwachungsmodul 16 weist ein Grundgerät 34 und einen mit dem Grundgerät 34 zusammenwirkenden Betätiger 36 auf. Das Grundgerät 34 umfasst vorzugsweise einen oder mehrere Sensoren und/oder weitere elektronische Bauteile und ist daher vorzugsweise an eine Stromversorgung angeschlossen. Des Weiteren ist das Grundgerät 34 vorzugsweise über mehrkanalig-redundante Leitungen, wie hier die Leitungen 22, 24 mit der Steuerungseinheit 26 verbunden. Das Grundgerät 34 bildet daher vorzugsweise das zuvor erwähnte Rahmenteil 18 des Schutztürüberwachungsmoduls 16.

Wenngleich es ebenso denkbar wäre, das Grundgerät 34 als Türteil 17 des Schutztürüberwachungsmoduls 16 einzusetzen, ist dies weniger bevorzugt. In einem solchen Fall müsste die meist feste Verdrahtung mit der Steuerungseinheit 26 sowie die Stromversorgung an den beweglichen Teil der Schutztür 14 hingeführt sein, was in der Regel umständlicher ist als eine Zuführung der Leitungen 22, 24 sowie der Stromversorgung an den statischen Teil 20 der Schutztür 14.

Der Betätiger 36 fungiert als Gegenstück zu dem Grundgerät 34 und dient der Betätigung des Grundgeräts 34. Das Grundgerät 34 weist hierzu eine entsprechende Betätigeraufnahme 38 auf, in die der Betätiger 36 einführbar ist (siehe Fig. 2A-2C).

Eine Funktion des Grundgeräts 34 ist es, zu detektieren, ob der Betätiger 36 in die Betätigeraufnahme 38 eingeführt ist oder nicht. Hierzu weist der Betätiger 36 vorzugsweise einen RFID-Chip auf, der von einem in der Betätigeraufnahme 38 angeordneten Detektor auslesbar ist. Das Grundgerät 34 ist dazu eingerichtet, ein Schutztürsignal zu erzeugen, wenn der Betätiger 36 in die Betätigeraufnahme 38 eingeführt ist. Dieses Schutztürsignal wird vorzugsweise als elektrisches Signal erzeugt. Es kann sich hierbei um ein digitales, ein gepulstes, ein codiertes und/oder sonstiges (vorzugsweise elektrisches) Signal handeln.

Durch Auswertung des Schutztürsignals in der Steuerungseinheit 26 kann das Schutztürüberwachungssystem 10 zu jeder Zeit eindeutig feststellen, ob die Schutztür 14 geschlossen ist oder nicht. Der Roboter 12 kann in Abhängigkeit dessen derart gesteuert werden, dass dieser nur bei geschlossener Schutztür 14 betreibbar ist.

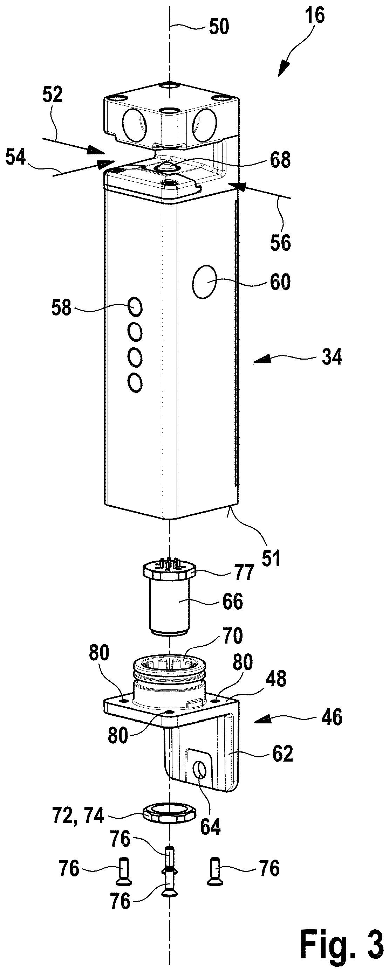

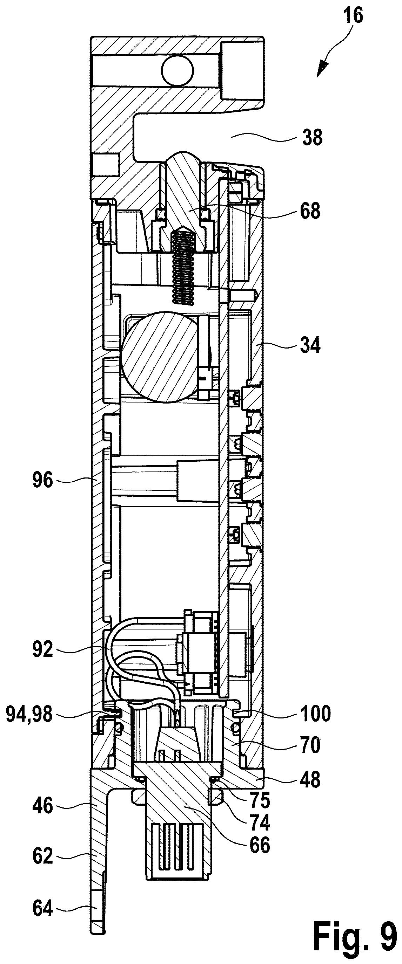

In dem in Fig. 2A-2C gezeigten Ausführungsbeispiel weist der Betätiger 36 ein im Wesentlichen stab-/stift-förmiges Betätigerelement 40 auf, welches in die Betätigeraufnahme 38 einführbar ist. An seiner in die Betätigeraufnahme 38 eingeführten Stirnseite weist das Betätigerelement 40 ein als Fangbohrung ausgebildetes Durchgangsloch (nicht gezeigt) auf, in das ein in der Betätigeraufnahme 38 angeordneter Gegenhalter 68, der einen Bolzen aufweist (siehe Fig. 3 und 9), eingreifen kann, um den Betätiger 36 beispielsweise während der Aktivierung einer Zuhaltefunktion in der Betätigeraufnahme 38 zu halten.

Wie in Fig. 2A-2C gezeigt, ist das Betätigerelement 40 im geschlossenen Zustand der Schutztür 14 in die Betätigeraufnahme 38 eingeführt. Es versteht sich, dass die Betätigeraufnahme 38 des Schutztürüberwachungsmoduls 16 der vorliegenden Erfindung nicht auf die Aufnahme von stab-/stift-förmigen Betätigerelementen 40 beschränkt sein soll, sondern dazu ausgebildet ist, Betätiger 36 im Allgemeinen aufnehmen, welcher ein insbesondere hinsichtlich Form geeignetes Betätigerelement 40 aufweisen.

In dem in Fig. 2A-2C gezeigten Ausführungsbeispiel weist die Schutztür 14 einen Griff 42 auf, mit welchem ein Benutzer die Schutztür 14 öffnen oder schließen kann. Die Schutztür 14 ist hier als Schwenktür ausgebildet, kann jedoch grundsätzlich auch als Schiebetür oder irgendeine andere Art von trennender Schutzeinrichtung (beispielsw. als Klappe) ausgebildet sein.

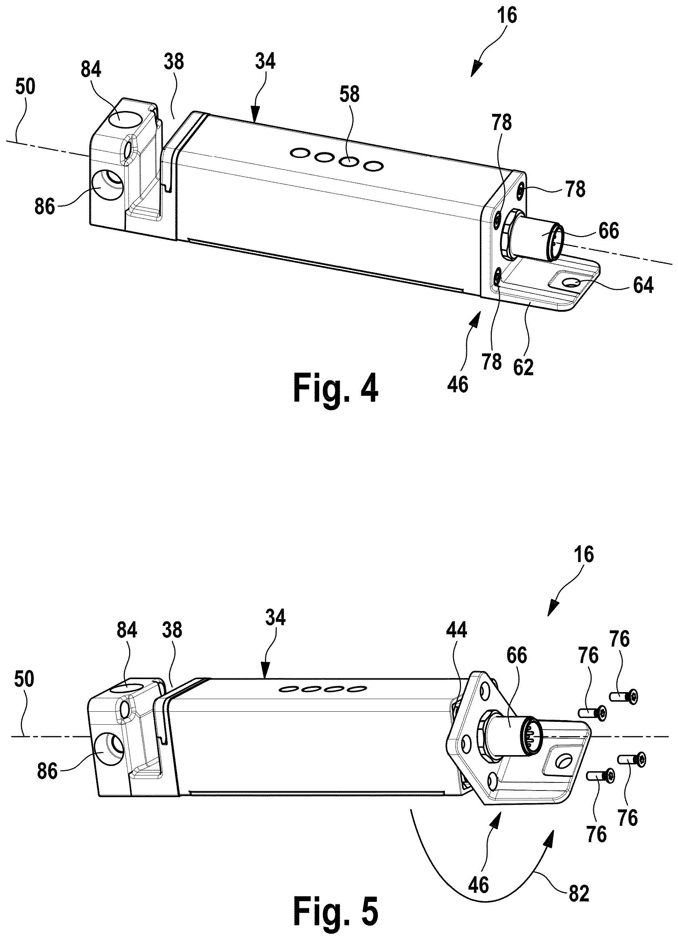

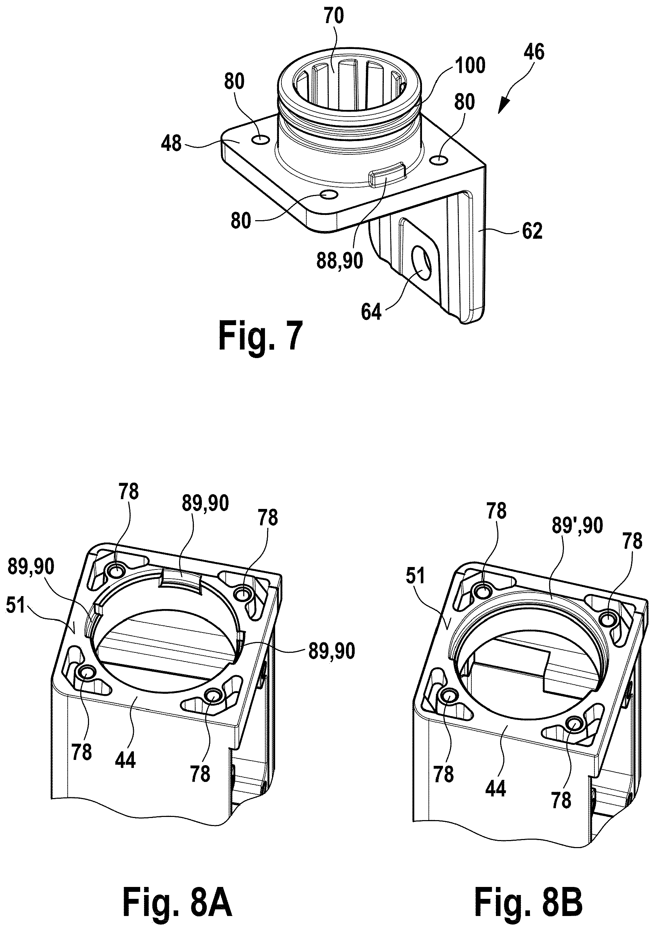

Fig. 3 zeigt eine Explosionsdarstellung des Grundgeräts 34 mit einem daran montierbaren Montagewinkel 46 des Schutztürüberwachungsmoduls 16. Das Grundgerät 34 erstreckt sich entlang einer Achse 50, die hier einer Mittel- bzw. Längsachse des Grundgeräts 34 entspricht. Das Grundgerät 34 weist an einer quer zu der Achse 50 verlaufenden, unteren Stirnseite 51 (vorliegend bezeichnet als "erste Stirnseite") eine erste Schnittstelle 44 (siehe auch Fig. 5, 8A, 8B) auf, die mit einer an dem Montagewinkel 46 vorgesehenen, zweiten Schnittstelle 48 zusammenwirkt. Die erste Schnittstelle 44 und die zweite Schnittstelle 48 sind dazu ausgebildet, miteinander gekoppelt zu werden.

Die Betätigeraufnahme 38 ist dazu ausgebildet, den Betätiger 36 aus einer ersten Richtung 52, aus einer zu der ersten Richtung 52 um die Achse 50 um 90° entgegen dem Uhrzeigersinn rotierten zweiten Richtung 54 und aus einer zu der zweiten Richtung 54 um die Achse 50 um 90° entgegen dem Uhrzeigersinn rotierten dritte Richtung 56 aufzunehmen. Somit lässt sich der Betätiger 36 aus mindestens drei verschiedenen Richtungen 52, 54, 56 in die Betätigeraufnahme 38 einführen. Gemäß einer bevorzugten Ausgestaltung lässt er der Betätiger 36 aus genau diesen drei verschiedenen Richtungen 52, 54, 56 (und keiner weiteren Richtung) in die Betätigeraufnahme 38 einführen. Diese drei Richtungen 52, 54, 56 liegen alle in einer gemeinsamen Ebene.

Bei dem in Fig. 3 dargestellten Ausführungsbeispiel des Schutztürüberwachungsmoduls 16 lässt sich der Betätiger 36 auch aus Zwischenrichtungen, welche in Bezug auf die Richtungen 52, 54, 56 um die Achse 50 um Winkel < 90° rotiert sind und mit den Richtungen 52, 54, 56 in einer gemeinsamen Ebene angeordnet sind, in die Betätigeraufnahme 38 einführen. Der Betätiger 36 kann mit einer geradlinigen Bewegung und/oder einer Drehbewegung in die Betätigeraufnahme 38 eingeführt werden.

Das Grundgerät 34 weist ferner ein oder mehrere optische Kontrollanzeigen 58 auf, welche einen Zustand des Schutztürüberwachungsmoduls 16 anzeigen. Des weiteren ist eine Bedieneinrichtung 60 vorgesehen, mittels der ein Benutzer einen Zustand des Schutztürüberwachungsmoduls 16 ändern kann, beispielsweise um eine oder mehrere Funktionen des Schutztürüberwachungsmoduls 16 zu sperren. Zum Beispiel ist die Bedieneinrichtung 60 ist dazu ausgebildet, die Zuhaltefunktion des Schutztürüberwachungsmoduls 16 manuell zu deaktivieren, indem der Gegenhalter bzw. Sperrbolzen 68 entriegelt wird.

In dem in Fig. 3 gezeigten Ausführungsbeispiel hat der Montagewinkel 46 einen im Wesentlichen L-förmigen Querschnitt. Der Montagewinkel 46 weist eine Montageseite 62 auf, welche quer, vorzugsweise orthogonal, zu der zweiten Schnittstelle 48 des Montagewinkels 46 angeordnet ist. An der Montageseite 62 ist eine vierte Aufnahme 64 vorgesehen, welche dazu ausgebildet ist, ein Befestigungsmittel, wie beispielsweise eine Schraube, zum Befestigen des Montagewinkels 46 an beispielsweise dem unbeweglichen zweiten Teil 20 der Schutztür 14 aufzunehmen.

Der Montagewinkel 64 ist ferner dazu eingerichtet, einen Stecker 66 aufzunehmen, der mit dem Grundgerät 34 verbunden ist und Teil der ersten Schnittstelle 44 sein kann. Der Montagewinkel 46 umfasst eine erste Aufnahme 70, welche den Stecker 66 aufnimmt. Der Stecker 66 ist dazu ausgebildet, das Grundgerät 34 mit einem Anschlussstecker zu verbinden. Mit Hilfe des Steckers 66 lässt sich das Grundgerät 34 des Schutztürüberwachungsmoduls 16 beispielsweise an eine Stromversorgung 32 anschließen und/oder mit der Steuerungseinheit 26 verbinden.

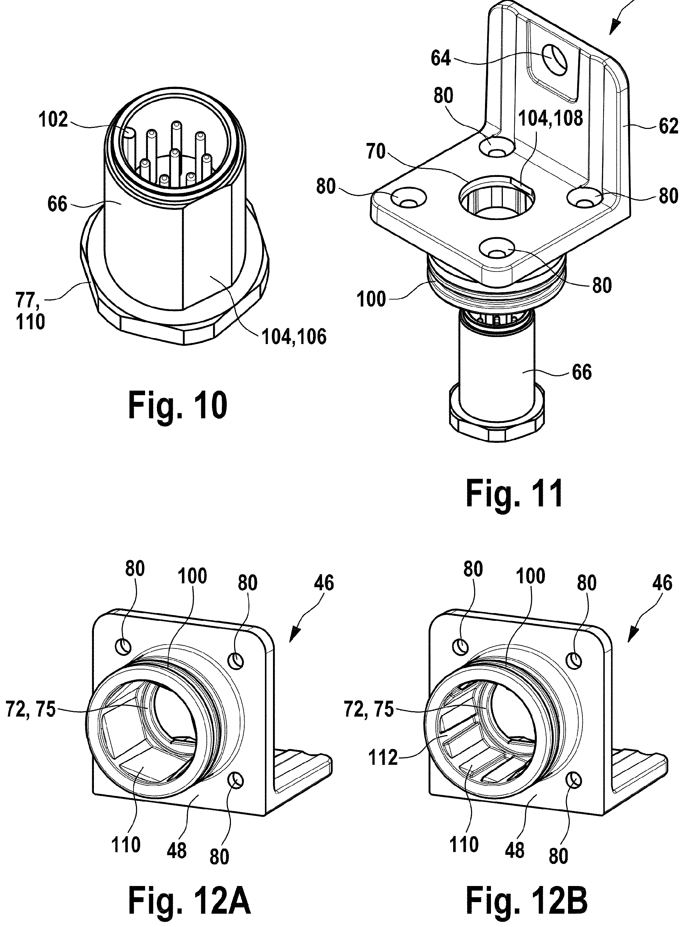

Der Stecker 66 ist mit Hilfe einer Axialsicherung 72 (vorliegend bezeichnet als "zweite Axialsicherung") an dem Montagewinkel 46 axial entlang der Achse 50 gesichert. Die Axialsicherung 72 umfasst eine Mutter 74, die sich auf ein am Stecker 66 vorgesehenes Außengewinde (nicht dargestellt) aufschrauben lässt. Des Weiteren umfasst die Axialsicherung 72 ein in dem Montagewinkel 46 angeordneten Gegenhalter 75 für den Kopf 77 des Steckers 66 (siehe Fig. 9 und 12A). Im montierten Zustand ist der Stecker 66 somit in der ersten Aufnahme 70 des Montagewinkels 46 axial gesichert, wobei der Kopf 77 des Stecker 66 mit Hilfe der Mutter 74 in axialer Richtung gegen den Gegenhalter 75 gedrückt wird (siehe Fig. 9).

Der Montagewinkel 46 ist mittels einer Vielzahl von Befestigungsmitteln 76 an dem Grundgerät 34 befestigt. Die erste Schnittstelle 44 weist hierzu im vorliegenden Fall vier Aufnahmen 78 (vorliegend bezeichnet als "zweite Aufnahmen") auf (siehe Fig. 8A und 8B). Ebenso weist die zweite Schnittstelle 48 vier Aufnahmen 80 (vorliegend bezeichnet als "dritte Aufnahmen") auf (siehe Fig. 7, 12A und 12B). Die zweiten Aufnahmen 78 und die dritten Aufnahmen 80 sind dazu ausgebildet, die Befestigungsmittel 76, welche vorzugsweise als Schrauben ausgeführt sind, aufzunehmen. Fluchten die zweiten Aufnahmen 78 und die dritten Aufnahmen 80 miteinander, so können jeweils eine zweite Aufnahme 78 und eine dritte Aufnahme 80 gemeinsam ein Befestigungsmittel 76 aufnehmen, um den Montagewinkel 46 an dem Grundgerät 34 zu befestigen. In dem vorliegend gezeigten Ausführungsbeispiel sind die zweiten Aufnahmen 78 und die dritten Aufnahmen 80 jeweils als Durchgangslöcher ausgestaltet, die zusammen ein quadratisches Lochmuster bilden. Die Mittelachsen der die Aufnahmen 78, 80 bildenden Durchgangslöcher sind also mit anderen Worten in der Draufsicht auf Eckpunkten eines Quadrats angeordnet.

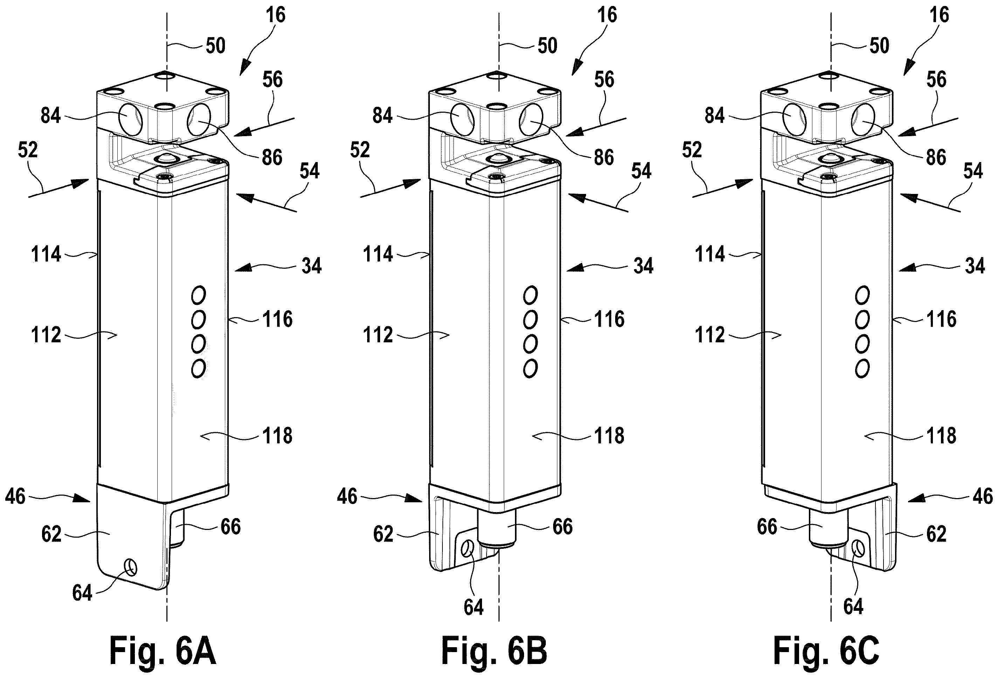

Erfindungsgemäß kann der Montagewinkel 46 in verschiedenen Positionen an dem Grundgerät 34 befestigt werden. Dies ermöglicht es, das Grundgerät 34 in verschiedenen Ausrichtungen relativ zu dem unbeweglichen zweiten Teil 20 der Schutztür 14 zu befestigen. Der Montagewinkel 46 kann in einer ersten Position (siehe Fig. 6A), einer zweiten Position (siehe Fig. 6B) und einer dritten Position (siehe Fig. 6C) mit dem Grundgerät 34 gekoppelt sein. Fig. 5 deutet schematisch mithilfe des Pfeils 82 eine Drehrichtung an, in der sich der Montagewinkel 46 gegenüber dem Grundgerät 34 um die Achse 50 verschwenken lässt. Selbstverständlich lässt sich der Montagewinkel 46 nur bei gelösten Befestigungsmitteln 76 gegenüber dem Grundgerät 34 verschwenken.

Fig. 6A zeigt den Montagewinkel 46 in seiner gegenüber dem Grundgerät 34 ersten Position. Fig. 6B zeigt den Montagewinkel 46 in seiner gegenüber dem Grundgerät 34 zweiten Position. Fig. 6C zeigt den Montagewinkel 46 in seiner gegenüber dem Grundgerät 34 dritten Position. Die zweite Position ist zu der ersten Position um die Achse 50 des Grundgeräts 34 um 90° im Uhrzeigersinn rotiert. Die dritte Position ist zu der zweiten Position um die Achse 50 des Grundgeräts 34 um 90° im Uhrzeigersinn rotiert.

Eine Kopplung der ersten Schnittstelle 44 mit der zweiten Schnittstelle 48 in einer zu der dritten Position um die Achse 50 des Grundgeräts 34 um 90° im Uhrzeigersinn rotierten vierten Position wird zur Vermeidung einer Fehlmontage, wie nachfolgend im Detail erläutert, durch eine mechanische Sperreinrichtung 90 verhindert (siehe Fig. 7, Fig. 8A und Fig. 8B). Somit lässt sich der Montagewinkel 46 in exakt drei verschiedenen, vordefinierten Position gegenüber dem Grundgerät 34 anordnen. Die vierte Position kann eine Position sein, welche für die Betätigeraufnahme 38 hinsichtlich der Aufnahme des Betätigers 36 ungünstig ist, da der Betätiger 36 nicht oder nur schlecht in die Betätigeraufnahme 38 eingreifen kann.

Wenn der Montagewinkel 46 in seiner ersten Position an dem Grundgerät 34 befestigt ist, ist die Montageseite 62 des Montagewinkels 46 orthogonal zu der ersten Richtung 52 ausgerichtet (Fig. 6A). Ist der Montagewinkel 46 hingegen in seiner zweiten Position an dem Grundgerät 34 befestigt, ist die Montageseite 62 des Montagewinkels 46 orthogonal zu der zweiten Richtung 54 ausgerichtet (Fig. 6B). In der dritten Position ist die Montageseite 62 des Montagewinkels 46 orthogonal zu der dritten Richtung 56 ausgerichtet (Fig. 6C).

Das Grundgerät 34 weist ferner im Bereich seines oberen Endes ein erstes Durchgangsloch 84 und ein zu dem ersten Durchgangsloch 84 verlaufendes zweites Durchgangsloch 86 auf. In der ersten Position des Montagewinkels 46 verläuft das erste Durchgangsloch 84 orthogonal zu der Montageseite 62 (Fig. 6A), in der zweiten Position verläuft das zweite Durchgangsloch 86 orthogonal zu der Montageseite 62 (Fig. 6B) und in der dritten Position verläuft das erste Durchgangsloch 84 orthogonal zu der Montageseite 62 (Fig. 6C).

Somit kann das Grundgerät 34 mit einem in das erste Durchgangsloch 84 eingesetzten Befestigungsmittel (z.B. einer Schraube) an dem unbeweglichen zweiten Teil 20 der Schutztür 14 befestigt werden, wenn die in Fig. 6A gezeigte erste Position des Montagewinkels 46 gewählt wird. Das Durchgangsloch 84 verläuft dann parallel zu der an dem Montagewinkel 46 vorgesehenen vierten Aufnahme 64, die zur Befestigung des Montagewinkels 46 an dem unbeweglichen zweiten Teil 20 der Schutztür 14 mithilfe eines weiteren Befestigungsmittels (z.B. einer Schraube) verwendet wird.

In der in Fig. 6B gezeigten zweiten Position des Montagewinkels 46 verläuft das zweite Durchgangsloch 86 parallel zu der vierten Aufnahme 64, so dass sich das Grundgerät 34 gemeinsam mit dem Montagewinkel 46 dann an dem unbeweglichen zweiten Teil 20 der Schutztür 14 befestigen lässt, indem ein Befestigungsmittel durch das zweite Durchgangsloch 86 und ein weiteres Befestigungsmittel durch die vierte Aufnahme 64 hindurchgeführt wird.

In ähnlicher Weise lässt sich das Grundgerät 34 gemeinsam mit dem Montagewinkel 46 an der dem unbeweglichen zweiten Teil 20 der Schutztür 14 befestigen, indem ein Befestigungsmittel durch das zweite Durchgangsloch 84 und ein weiteres Befestigungsmittel durch die vierte Aufnahme 64 hindurchgeführt wird, wenn die in Fig. 6C gezeigte dritte Position des Montagewinkels 46 gewählt wird.

Das Grundgerät 34 weist eine erste Seitenfläche 112, eine zweite Seitenfläche 114, eine dritte Seitenfläche 116 und eine vierte Seitenfläche 118 auf. Die erste Seitenfläche 112 ist auf der linken Seite des Grundgeräts 34 angeordnet. Die zweite Seitenfläche 114 ist auf der Rückseite des Grundgeräts 34 angeordnet. Die dritte Seitenfläche 116 ist auf der rechten Seite des Grundgeräts 34 angeordnet. Die vierte Seitenfläche 118 ist auf der Vorderseite des Grundgeräts 34 angeordnet. Die erste Seitenfläche 112 verläuft parallel zu der dritten Seitenfläche 116. Die zweite Seitenfläche 114 verläuft parallel zu der vierten Seitenfläche 118 und jeweils quer zu der ersten und der dritten Seitenfläche 112, 116.

In der ersten Position ist die Montageseite 62 des Montagewinkels 46 parallel zu der ersten Seitenfläche 112 ausgerichtet oder fluchtet mit dieser (Fig. 6A). In der zweiten Position ist die Montageseite 62 des Montagewinkels 46 parallel zu der zweiten Seitenfläche 114 ausgerichtet oder fluchtet mit dieser (Fig. 6B). In der dritten Position ist die Montageseite 62 des Montagewinkels 46 parallel zu der dritten Seitenfläche 116 ausgerichtet oder fluchtet mit dieser (Fig. 6C). Eine Ausrichtung der Montageseite 62 des Montagewinkels 46 parallel zu oder fluchtend mit der vierten Seitenfläche 118 wird, wie bereits erwähnt, erfindungsgemäß durch die mechanische Sperreinrichtung 90 verhindert.

Die mechanische Sperreinrichtung 90 ist insbesondere in Fig. 7, 8A und 8B ersichtlich. Die mechanische Sperreinrichtung 90 weist ein an der zweiten Schnittstelle 48 an dem Montagewinkel 46 angeordnetes Sperrelement 88 und mindestens eine als Gegenstück dazu fungierende Aussparung 89 auf, die an der ersten Schnittstelle 44 des Grundgeräts 34 angeordnet ist. Die mindestens eine Aussparung 89, 89' nimmt das mechanische Sperrelement 88 jeweils in der ersten Position, der zweiten Position und der dritten Position des Montagewinkels 46 auf. Die mechanische Sperreinrichtung 90 verhindert jedoch eine Kopplung der ersten Schnittstelle 44 mit der zweiten Schnittstelle 48 in der vierten Position.

Fig. 8A und 8B zeigen zwei unterschiedliche Ausführungsbeispiele des Teils der mechanischen Sperreinrichtung 90, der an der an dem Grundgerät 34 angeordneten ersten Schnittstelle 44 vorgesehen ist. Die in Fig. 8A gezeigte Aussparung weist drei räumlich voneinander getrennte Aussparungen 89 auf, welche dazu ausgebildet sind, das mechanische Sperrelement 88 in jeweils einer der ersten Position, der zweiten Position oder der dritten Position aufzunehmen. Um den Montagewinkel 46 beispielsweise von der ersten Position in die zweite Position zu rotieren, muss der Montagewinkel 46 axial entlang der Achse 50 des Grundgeräts 34 abgehoben werden und kann dann in eine andere Position gebracht werden, indem das an dem Montagewinkel 46 angebrachte Sperrelement 88 in eine der beiden anderen Aussparungen 89 eingesetzt wird.

Bei dem in Fig. 8B gezeigten Ausführungsbeispiel ist die Aussparung 89' als eine um die Achse 50 des Grundgeräts 34 mit weniger als 360° umlaufende Aussparung ausgebildet. Dieses bevorzugtes Ausführungsbeispiel der Aussparung 89' hat insbesondere den Vorteil, dass der Montagewinkel 46 stufenlos von einer Position in eine andere Position rotiert werden kann, ohne dass dazu der Montagewinkel 46 axial entlang der Achse 50 des Grundgeräts 34 abgehoben werden muss. Eine geeignete Position (die erste Position, die zweite Position oder die dritte Position) wird einem Benutzer mittels einer der Vielzahl von zweiten Aufnahmen 78 und einer Vielzahl von dazu fluchtenden dritten Aufnahmen 80 angezeigt. Ein Benutzer kann also so lange den Montagewinkel 46 stufenlos rotieren, bis der Benutzer aufgrund der miteinander fluchtenden zweiten und dritten Aufnahmen 78, 80 eine geeignete Position erkennt.

Die weniger als 360° um die Achse 50 des Grundgeräts 34 umlaufende Aussparung 89' kann zudem eine vollständige Rotation des Steckers 66 um die Achse 50 des Grundgeräts 34 verhindern. Dies kann insbesondere auch dann vorteilhaft sein, wenn der Stecker 66 über elektrische Leitungen 92 mit dem Grundgerät 34 verbunden ist, welche davor geschützt werden sollen, mehrfach verdreht zu werden (siehe Fig. 9).

Eine in Fig. 9 gezeigte Axialsicherung 94 (vorliegend bezeichnet als "erste Axialsicherung"), welche den Montagewinkel 46 entlang der Achse 50 an dem Grundgerät 34 sichert, kann in Kombination mit der weniger als 360° umlaufenden Aussparung 89' besonders vorteilhaft sein. Die erste Axialsicherung 94 weist eine an dem Grundgerät 34 lösbar angeordnete Seitenwand 96 mit einem mechanischen Sperrelement 98 (vorliegend bezeichnet als "zweites mechanisches Sperrelement") und einer an dem Montagewinkel 46 angeordneten Aufnahme 100 (vorliegend bezeichnet als "fünfte Aufnahme") auf. Zur Montage des Montagewinkels 46 an dem Grundgerät 34 lässt sich die Seitenwand 96 von dem Gehäuse des Grundgeräts 34 lösen. Anschließend kann der Montagewinkel 46, beispielsweise zusammen mit dem Stecker 66, in das Grundgerät 34 eingesetzt werden. Die lösbare Seitenwand 96 kann dann wieder an dem Grundgerät 34 befestigt werden, sodass das an der Seitenwand 96 angeordnete zweite mechanisches Sperrelement 98 in die Aufnahme 100 des Montagewinkels 46 eingreift und den Montagewinkel 46 entlang der Achse 50 des Grundgeräts 34 sichert. Soll anschließend die Position des Montagewinkels 46 verändert werden, so kann dies durch einfaches Lösen der Befestigungsmittel 76 und anschließendes Drehen des Montagewinkels 46 um die Achse 50 erfolgen. Der Montagewinkel 46 verbleibt während der Drehung in seiner axial gesicherten Position. Eine Beschädigung oder gar ein Abriss der elektrischen Leitungen 92 lässt sich dadurch wirksam verhindern.

Fig. 10 zeigt eine perspektivische Ansicht eines Ausführungsbeispiels des Steckers 66. Der Stecker 66 kann ein Poka-Yoke-Element 102 aufweisen, welches dazu ausgebildet ist, den Stecker 66 in nur einer bestimmten Ausrichtung mit einem Anschlussstecker (z.B. für die Verbindung mit der Stromversorgung 32 und/oder der Steuerungseinheit 26 zu verbinden. Dieses Poka-Yoke-Element 102 wird häufig auch als Codierung des Steckers 66 bezeichnet.

Eine an dem Stecker 66 und der ersten Aufnahme 70 des Montagewinkels 46 vorgesehene Positioniereinrichtung 104 sorgt, ähnlich zu einem Poka-Yoke-Element, dafür, dass die erste Aufnahme 70 den Stecker 66 in nur einer bestimmten Ausrichtung aufnehmen kann. In dem in Fig. 10 und Fig. 11 gezeigten Ausführungsbeispiel ist der Stecker 66 im Wesentlichen zylinderförmig ausgestaltet und weist eine abgeflachte Zylindermantelfläche 106 auf, die in montiertem Zustand an einer an dem Montagewinkel 46 vorgesehenen, planen Anschlagfläche 108 anliegt. Somit wird die Positioniereinrichtung 104 durch die abgeflachte Zylindermantelfläche 106 und die Anschlagfläche 108 gebildet.

Fig. 12A und Fig. 12B zeigen zwei Ausführungsbeispiele des Montagewinkels 46. Der wesentliche Unterschied dieser beiden Ausführungsbeispiele besteht in der Art der Ausgestaltung der ersten Aufnahme 70 zur Bildung einer Verdrehsicherung 110, die ein Verdrehen des Steckers 66 relativ zu dem Montagewinkel 46 verhindert. Die erste Aufnahme 70 des Montagewinkels 46 weist in beiden Fällen eine zu der Außenkontur des Steckerkopfes 77 korrespondierende Innenkontur auf, sodass der Stecker 66 rotatorisch um die Achse 50 des Grundgeräts 34 gesichert ist. In dem in Fig. 12A gezeigten Ausführungsbeispiel weist die erste Aufnahme 70 eine aus sechs Teilflächen gebildete Sechskant-Innenkontur auf. In dem in Fig. 12B gezeigten Ausführungsbeispiel sind die einzelnen Teilflächen zusätzlich durch jeweils eine Aussparung 112 in jeweils zwei Unter-Teilflächen aufgeteilt.

Es versteht sich, dass die in den Figuren gezeigten Ausführungsbeispiele lediglich beispielhafte Ausgestaltungen des erfindungsgemäßen Schutztürüberwachungsmoduls 16 zeigen, die die Vorteile des erfindungsgemäßen Schutztürüberwachungsmoduls 16 illustrativ veranschaulichen sollen. Diverse Modifikationen können an diesen Ausführungsbeispielen vorgenommen werden, ohne den Rahmen der vorliegenden Erfindung zu verlassen.

### Bezugszeichenliste

- 10: Schutztürüberwachungssystem
- 12: Roboter
- 14: Schutztür
- 16: Schutztürüberwachungsmodul
- 17: Türteil
- 18: Rahmenteil
- 20: unbeweglicher Teil
- 22, 24: Leitungen
- 26: Steuerungseinheit
- 28, 30: Schütze
- 32: Stromversorgung
- 34: Grundgerät
- 36: Betätiger
- 38: Betätigeraufnahme
- 40: Betätigerelement
- 42: Griff
- 44: erste Schnittstelle
- 46: Montagewinkel
- 48: zweiten Schnittstelle
- 50: Achse
- 51: erste Stirnseite
- 52: erste Richtung
- 54: zweite Richtung
- 56: dritte Richtung
- 58: Kontrollanzeigen
- 60: Bedieneinrichtung
- 62: Montageseite
- 64: vierte Aufnahme
- 66: Stecker
- 68: Gegenhalter
- 70: erste Aufnahme
- 72: zweite Axialsicherung
- 74: Mutter
- 75: Gegenhalter
- 76: Befestigungsmittel
- 77: Kopf
- 78: zweite Aufnahmen
- 80: dritte Aufnahmen
- 82: Drehrichtung
- 84: erstes Durchgangsloch
- 86: zweites Durchgangsloch
- 88: erstes mechanisches Sperrelement
- 89, 89': Aussparung
- 90: mechanische Sperreinrichtung
- 92: Leitungen
- 94: erste Axialsicherung
- 96: Seitenwand
- 98: zweites mechanisches Sperrelement
- 100: fünfte Aufnahme
- 102: Poka-Yoke-Element
- 104: Positioniereinrichtung
- 106: abgeflachte Zylindermantelfläche
- 108: Anschlagfläche
- 110: Verdrehsicherung
- 112: erste Seitenfläche
- 114: zweite Seitenfläche
- 116: dritte Seitenfläche
- 118: vierte Seitenfläche

## Patentansprüche

1. Schutztürüberwachungsmodul (16) zur Überwachung eines Zustands einer Schutztür (14), aufweisend:
- ein Grundgerät (34) zur Erzeugung eines Schutztürsignals, welches eine Betätigeraufnahme (38) zur Aufnahme eines Betätigers (36) aufweist und dazu eingerichtet ist, ein Schutztürsignal zu erzeugen, wenn der Betätiger (36) in die Betätigeraufnahme (38) des Grundgeräts (34) eingeführt ist, wobei das Grundgerät (34) eine Achse (50) und eine quer zu der Achse (50) angeordnete erste Stirnseite (51) mit einer ersten Schnittstelle (44) aufweist; und
- einen Montagewinkel (46) mit einer zweiten Schnittstelle (48), welche dazu ausgebildet ist, in einer ersten Position, einer zu der ersten Position um die Achse (50) des Grundgeräts (34) im Uhrzeigersinn um 90° rotierten zweiten Position und einer zu der zweiten Position um die Achse (50) des Grundgeräts (34) im Uhrzeigersinn um 90° rotierten dritten Position mit der ersten Schnittstelle (44) des Grundgeräts (34) gekoppelt zu sein, wobei der Montagewinkel (46) eine Montageseite (62) aufweist, welche quer zu der zweiten Schnittstelle des Montagewinkels (46) angeordnet ist;
wobei die erste Schnittstelle (44) und die zweite Schnittstelle (48) eine mechanische Sperreinrichtung (90) aufweisen, welche dazu ausgebildet ist, eine Kopplung der ersten Schnittstelle (44) mit der zweiten Schnittstelle (48) in einer zu der dritten Position um die Achse (50) des Grundgeräts (34) im Uhrzeigersinn um 90° rotierten vierten Position zu verhindern,
wobei die Betätigeraufnahme (38) dazu ausgebildet ist, einen Betätiger (36) in einer ersten Richtung (52) aufzunehmen und auch in einer zu der ersten Richtung (52) um die Achse (50) des Grundgeräts (34) entgegen dem Uhrzeigersinn um 90° rotierten zweiten Richtung (54) aufzunehmen und auch in einer zu der zweiten Richtung (54) um die Achse (50) des Grundgeräts (34) entgegen dem Uhrzeigersinn um 90° rotierten dritten Richtung (56) aufzunehmen, und
wobei in der ersten Position die Montageseite (62) orthogonal zu der ersten Richtung (52) ist, in der zweiten Position die Montageseite (62) orthogonal zu der zweiten Richtung (54) ist und in der dritten Position die Montageseite (62) orthogonal zu der dritten Richtung (56) ist.

2. Schutztürüberwachungsmodul (16) nach Anspruch 1, die mechanische Sperreinrichtung (90) ein mechanisches Sperrelement (88) und eine Aussparung (89, 89') aufweist, wobei eine der beiden Schnittstellen das mechanische Sperrelement (88) aufweist und die andere Schnittstelle die Aussparung (89, 89') aufweist, welche dazu ausgebildet ist, jeweils in der ersten Position, der zweiten und der dritten Position das mechanische Sperrelement (88) aufzunehmen und die vierte Position zu verhindern.

3. Schutztürüberwachungsmodul (16) nach Anspruch 2, wobei die Aussparung (89') eine um die Achse (50) des Grundgeräts (34) mit weniger als 360° umlaufende Aussparung (89') ist.

4. Schutztürüberwachungsmodul (16) nach einem der vorstehenden Ansprüche, wobei das Grundgerät (34) und/oder der Montagewinkel (46) eine erste Axialsicherung (94) aufweist, welche den Montagewinkel (46) entlang der Achse (50) des Grundgeräts (34) axial sichert.

5. Schutztürüberwachungsmodul (16) nach Anspruch 4, wobei das Grundgerät (34) eine lösbar befestigte Seitenwand (96) aufweist, welche einen Teil der erste Axialsicherung (94) aufweist.

6. Schutztürüberwachungsmodul (16) nach einem der vorstehenden Ansprüche,
wobei der Montagewinkel (46) eine Montageseite (62) aufweist, welche quer zu der zweiten Schnittstelle (48) des Montagewinkels (46) angeordnet ist,
wobei das Grundgerät (34) ein erstes Durchgangsloch (84) und ein orthogonal zu dem ersten Durchgangsloch (84) verlaufendes zweites Durchgangsloch (86) aufweist, und
wobei in der ersten Position und der dritten Position das erste Durchgangsloch (84) orthogonal zu der Montageseite (62) verläuft und in der zweiten Position (84) das zweite Durchgangsloch (86) orthogonal zu der Montageseite (62) verläuft.

7. Schutztürüberwachungsmodul (16) nach einem der vorstehenden Ansprüche,
wobei der Montagewinkel (46) eine Montageseite (62) aufweist, welche quer zu der zweiten Schnittstelle (48) des Montagewinkels (46) angeordnet ist,
wobei das Grundgerät (34) eine erste Seitenfläche (112), eine zweite Seitenfläche (114) und eine dritte Seitenfläche (116) aufweist, welche im Wesentlichen quer zu der ersten Stirnseite (51) angeordnet sind, und
wobei die Montageseite (62) des Montagewinkels (46) in der ersten Position mit der ersten Seitenfläche (112) fluchtet oder parallel zu dieser ist, in der zweiten Position mit der zweiten Seitenfläche (114) fluchtet oder parallel zu dieser ist und in der dritten Position mit der dritten Seitenfläche (116) fluchtet oder parallel zu dieser ist.

8. Schutztürüberwachungsmodul (16) nach einem der vorstehenden Ansprüche, wobei die erste Schnittstelle (44) einen Stecker (66) aufweist, welcher dazu ausgebildet ist, Strom und/oder elektrische Signale zu übertragen, und wobei die zweite Schnittstelle (48) eine erste Aufnahme (70) aufweist, welche dazu ausgebildet ist, den Stecker (66) aufzunehmen.

9. Schutztürüberwachungsmodul (16) nach Anspruch 8, wobei der Stecker (66) und/oder der Montagewinkel (46) eine Verdrehsicherung (110) aufweisen, welche den Stecker (66) rotatorisch in Bezug auf die Achse (50) des Grundgeräts (34) in der ersten Aufnahme (70) sichert.

10. Schutztürüberwachungsmodul (16) nach Anspruch 8 oder 9, wobei der Stecker (66) und/oder der Montagewinkel (46) eine zweite Axialsicherung (72) aufweisen, welche den Stecker (66) in der ersten Aufnahme (70) entlang der Achse (50) des Grundgeräts (34) axial sichert.

11. Schutztürüberwachungsmodul (16) nach einem der vorstehenden Ansprüche,
wobei die erste Schnittstelle (44) eine Vielzahl von zweiten Aufnahmen (78) aufweist und die zweite Schnittstelle (48) eine Vielzahl von dritten Aufnahmen (80) aufweist,
wobei jeweils mindestens eine der Vielzahl von dritten Aufnahmen (80) in der ersten Position, der zweiten Position und der dritten Position mit einer der Vielzahl von zweiten Aufnahmen (78) der ersten Schnittstelle (44) fluchtet, und
wobei die Vielzahl von zweiten Aufnahmen (78) und die Vielzahl von dritten Aufnahmen (80) jeweils dazu ausgebildet sind, ein Befestigungsmittel (76) zum Koppeln der ersten Schnittstelle (44) mit der zweiten Schnittstelle (48) aufzunehmen.

12. Schutztürüberwachungsmodul (16) nach einem der vorstehenden Ansprüche,
wobei der Montagewinkel (46) eine Montageseite (62) aufweist, welche quer zu der zweiten Schnittstelle (48) des Montagewinkels (46) angeordnet ist, und
wobei die Montageseite (62) des Montagewinkels (46) eine vierte Aufnahme (64) aufweist, welche dazu ausgebildet ist, ein Befestigungsmittel zum Befestigen des Montagewinkels (46) an einer Montagefläche aufzunehmen.

13. Schutztürüberwachungsmodul (16) nach einem der Ansprüche 8 bis 12, wobei der Stecker (66) ein Poka-Yoke-Element (102) aufweist.

14. Schutztürüberwachungssystem (10) mit:
- einer Schutztür (14) als Zugang zu einem Sicherheitsbereich,
- einem Schutztürüberwachungsmodul (16) nach einem der Ansprüche 1 bis 13 zur Überwachung eines Zustands der Schutztür (14),
- einem Betätiger (36) und
- einer Steuerungseinheit (26), welche dazu eingerichtet ist, das Schutztürsignal auszulesen und eine im Sicherheitsbereich befindliche Maschine oder Anlage (12) in Abhängigkeit des Schutztürsignals zu steuern.

## Claims

1. A safety gate monitoring module (16) for monitoring a state of a safety gate (14), comprising:
- a base unit (34) for generating a safety gate signal, which comprises an actuator receptacle (38) for receiving an actuator (36) and is configured to generate a safety gate signal when the actuator (36) is inserted into the actuator receptacle (38) of the base unit (34), wherein the base unit (34) comprises an axis (50) and a first end face (51) arranged transversely to the axis (50) and having a first interface (44); and
- a mounting bracket (46) having a second interface (48) configured to be coupled to the first interface (44) of the base unit (34) in a first position, a second position rotated clockwise by 90° with respect to the first position about the axis (50) of the base unit (34), and a third position rotated clockwise by 90° with respect to the second position about the axis (50) of the base unit (34), wherein the mounting bracket (46) comprises a mounting side (62) arranged transversely to the second interface of the mounting bracket (46);
wherein the first interface (44) and the second interface (48) comprise a mechanical blocking device (90) configured to prevent coupling of the first interface (44) to the second interface (48) in a fourth position rotated clockwise by 90° with respect to the third position about the axis (50) of the base unit (34),
wherein the actuator receptacle (38) is configured to receive an actuator (36) in a first direction (52), in a second direction (54) rotated anticlockwise by 90° with respect to the first direction (52) about the axis (50) of the base unit (34), and in a third direction (56) rotated anticlockwise by 90° with respect to the second direction (54) about the axis (50) of the base unit (34), and
wherein the mounting side (62) is orthogonal to the first direction (52) in the first position, the mounting side (62) is orthogonal to the second direction (54) in the second position, and the mounting side (62) is orthogonal to the third direction (56) in the third position.

2. The safety gate monitoring module (16) according to claim 1, wherein the mechanical blocking device (90) comprises a mechanical blocking element (88) and a recess (89, 89'), wherein one of the two interfaces comprises the mechanical blocking element (88) and the other interface comprises the recess (89, 89')that is configured to receive the mechanical blocking element (88) in each of the first position, the second position, and the third position and to prevent the fourth position.

3. The safety gate monitoring module (16) according to claim 2, wherein the recess (89') is a recess (89') which extends around the axis (50) of the base unit (34) by less than 360°.

4. The safety gate monitoring module (16) according to any one of the preceding claims, wherein the base unit (34) and/or the mounting bracket (46) /comprises a first axial securing means (94) that axially secures the mounting bracket (46) along the axis (50) of the base unit (34).

5. The safety gate monitoring module (16) according to claim 4, wherein the base unit (34) comprises a detachably fastened side wall (96) that includes a part of the first axial securing means (94).

6. The safety gate monitoring module (16) according to any one of the preceding claims,
wherein the mounting bracket (46) comprises a mounting side (62) arranged transversely to the second interface (48) of the mounting bracket (46),
wherein the base unit (34) comprises a first through-hole (84) and a second through-hole (86) extending orthogonally to the first through-hole (84), and
wherein the first through-hole (84) extends orthogonally to the mounting side (62) in the first position and the third position, and the second through-hole (86) extends orthogonally to the mounting side (62) in the second position (84).

7. The safety gate monitoring module (16) according to any one of the preceding claims,
wherein the mounting bracket (46) comprises a mounting side (62) arranged transversely to the second interface (48) of the mounting bracket (46),
wherein the base unit (34) comprises a first side surface (112), a second side surface (114) and a third side surface (116) that are arranged substantially transversely to the first end face (51), and
wherein the mounting side (62) of the mounting bracket (46) is flush with or parallel to the first side surface (112) in the first position, is flush with or parallel to the second side surface (114) in the second position, and is flush with or parallel to the third side surface (116) in the third position.

8. The safety gate monitoring module (16) according to any one of the preceding claims, wherein the first interface (44) comprises a plug (66) configured to transmit current and/or electrical signals, and wherein the second interface (48) comprises a first receptacle (70) configured to receive the plug (66).

9. The safety gate monitoring module (16) according to claim 8, wherein the plug (66) and/or the mounting bracket (46) have/has an anti-rotation lock (110) that rotationally secures the plug (66) with respect to the axis (50) of the base unit (34) in the first receptacle (70).

10. The safety gate monitoring module (16) according to claim 8 or 9, wherein the plug (66) and/or the mounting bracket (46) comprise a second axial securing means (72) that axially secures the plug (66) in the first receptacle (70) along the axis (50) of the base unit (34).

11. The safety gate monitoring module (16) according to any one of the preceding claims,
wherein the first interface (44) comprises a plurality of second receptacles (78) and the second interface (48) comprises a plurality of third receptacles (80),
wherein in each case at least one of the plurality of third receptacles (80) is aligned with one of the plurality of second receptacles (78) of the first interface (44) in the first position, the second position and the third position, and
wherein the plurality of second receptacles (78) and the plurality of third receptacles (80) are each configured to receive a fastening means (76) for coupling the first interface (44) to the second interface (48).

12. The safety gate monitoring module (16) according to any one of the preceding claims,
wherein the mounting bracket (46) comprises a mounting side (62) that is arranged transversely to the second interface (48) of the mounting bracket (46), and
wherein the mounting side (62) of the mounting bracket (46) comprises a fourth receptacle (64) configured to receive a fastening means for fastening the mounting bracket (46) to a mounting surface.

13. The safety gate monitoring module (16) according to any one of claims 8 to 12, wherein the plug (66) comprises a poka-yoke element (102).

14. A safety gate monitoring system (10), comprising:
- a safety gate (14) as an access to a safety area,
- a safety gate monitoring module (16) according to any one of claims 1 to 13 for monitoring a state of the safety gate (14),
- an actuator (36) and
- a control unit (26) configured to read the safety gate signal and to control a machine or system (12) located in the safety area in accordance with the safety gate signal.

## Revendications

1. Module de surveillance de porte de protection (16) pour la surveillance d'un état d'une porte de protection (14), présentant :
- un appareil de base (34) pour la génération d'un signal de porte de protection qui présente un logement pour actionneur (38) pour la réception d'un actionneur (36) et qui est configuré pour générer un signal de porte de protection lorsque l'actionneur (36) est introduit dans le logement pour actionneur (38) de l'appareil de base (34), dans lequel l'appareil de base (34) présente un axe (50) et une première face frontale (51) disposée transversalement à l'axe (50) et comportant une première interface (44) ; et
- une équerre de montage (46) comportant une seconde interface (48) qui est conçue pour être accouplée à la première interface (44) de l'appareil de base (34) dans une première position, une deuxième position tournée de 90° dans le sens des aiguilles d'une montre autour de l'axe (50) de l'appareil de base (34) par rapport à la première position, et une troisième position tournée de 90° dans le sens des aiguilles d'une montre autour de l'axe (50) de l'appareil de base (34) par rapport à la deuxième position, dans lequel l'équerre de montage (46) présente un côté de montage (62) qui est disposé transversalement à la seconde interface de l'équerre de montage (46) ;
dans lequel la première interface (44) et la seconde interface (48) présentent un dispositif d'arrêt mécanique (90) qui est conçu pour empêcher un accouplement de la première interface (44) avec la seconde interface (48) dans une quatrième position tournée de 90° dans le sens des aiguilles d'une montre autour de l'axe (50) de l'appareil de base (34) par rapport à la troisième position,
dans lequel le logement pour actionneur (38) est conçu pour recevoir un actionneur (36) dans une première direction (52) et également dans une deuxième direction (54) tournée de 90° dans le sens inverse des aiguilles d'une montre autour de l'axe (50) de l'appareil de base (34) par rapport à la première direction (52) et également dans une troisième direction (56) tournée de 90° dans le sens inverse des aiguilles d'une montre autour de l'axe (50) de l'appareil de base (34) par rapport à la deuxième direction (54), et
dans lequel, dans la première position, le côté de montage (62) est orthogonal à la première direction (52), dans la deuxième position, le côté de montage (62) est orthogonal à la deuxième direction (54) et, dans la troisième position, le côté de montage (62) est orthogonal à la troisième direction (56).

2. Module de surveillance de porte de protection (16) selon la revendication 1, le dispositif d'arrêt mécanique (90) présente un élément d'arrêt mécanique (88) et un évidement (89, 89'), dans lequel l'une des deux interfaces présente l'élément d'arrêt mécanique (88) et l'autre interface présente l'évidement (89, 89') qui est conçu pour recevoir l'élément d'arrêt mécanique (88) respectivement dans la première position, la deuxième position et la troisième position et pour empêcher la quatrième position.

3. Module de surveillance de porte de protection (16) selon la revendication 2, dans lequel l'évidement (89') est un évidement (89') s'étendant sur la périphérie autour de l'axe (50) de l'appareil de base (34) sur moins de 360°.

4. Module de surveillance de porte de protection (16) selon l'une des revendications précédentes, dans lequel l'appareil de base (34) et/ou l'équerre de montage (46) présentent un premier moyen de blocage axial (94) qui bloque axialement l'équerre de montage (46) le long de l'axe (50) de l'appareil de base (34).

5. Module de surveillance de porte de protection (16) selon la revendication 4, dans lequel l'appareil de base (34) présente une paroi latérale (96) fixée de manière amovible et présentant une partie du premier moyen de blocage axial (94).

6. Module de surveillance de porte de protection (16) selon l'une des revendications précédentes,
dans lequel l'équerre de montage (46) présente un côté de montage (62) qui est disposé transversalement à la seconde interface (48) de l'équerre de montage (46),
dans lequel l'appareil de base (34) présente un premier trou traversant (84) et un second trou traversant (86) s'étendant orthogonalement au premier trou traversant (84), et
dans lequel, dans la première position et dans la troisième position, le premier trou traversant (84) s'étend orthogonalement au côté de montage (62) et, dans la deuxième position (84), le second trou traversant (86) s'étend orthogonalement au côté de montage (62).

7. Module de surveillance de porte de protection (16) selon l'une des revendications précédentes,
dans lequel l'équerre de montage (46) présente un côté de montage (62) qui est disposé transversalement à la seconde interface (48) de l'équerre de montage (46),
dans lequel l'appareil de base (34) présente une première surface latérale (112), une deuxième surface latérale (114) et une troisième surface latérale (116) qui sont disposées sensiblement transversalement par rapport à la première face frontale (51), et
dans lequel le côté de montage (62) de l'équerre de montage (46) est aligné avec la première surface latérale (112) ou parallèle à celle-ci dans la première position, est aligné avec la deuxième surface latérale (114) ou parallèle à celle-ci dans la deuxième position, et est aligné avec la troisième surface latérale (116) ou parallèle à celle-ci dans la troisième position.

8. Module de surveillance de porte de protection (16) selon l'une des revendications précédentes, dans lequel la première interface (44) présente un connecteur (66) qui est configuré pour transmettre du courant et/ou des signaux électriques, et dans lequel la seconde interface (48) présente un premier logement (70) qui est conçu pour recevoir le connecteur (66).

9. Module de surveillance de porte de protection (16) selon la revendication 8, dans lequel le connecteur (66) et/ou l'équerre de montage (46) présentent un moyen de blocage de rotation (110) qui bloque le connecteur (66) en rotation par rapport à l'axe (50) de l'appareil de base (34) dans le premier logement (70).

10. Module de surveillance de porte de protection (16) selon la revendication 8 ou 9, dans lequel le connecteur (66) et/ou l'équerre de montage (46) présentent un second moyen de blocage axial (72) qui bloque axialement le connecteur (66) dans le premier logement (70) le long de l'axe (50) de l'appareil de base (34).

11. Module de surveillance de porte de protection (16) selon l'une des revendications précédentes,
dans lequel la première interface (44) présente une pluralité de deuxièmes logements (78) et la seconde interface (48) présente une pluralité de troisièmes logements (80),
dans lequel, dans la première position, la deuxième position et la troisième position, respectivement au moins un troisième logement parmi la pluralité de troisièmes logements (80) est aligné avec un deuxième logement de la pluralité de deuxièmes logements (78) de la première interface (44), et
dans lequel la pluralité de deuxièmes logements (78) et la pluralité de troisièmes logements (80) sont respectivement conçues pour recevoir un moyen de fixation (76) pour l'accouplement de la première interface (44) à la seconde interface (48).

12. Module de surveillance de porte de protection (16) selon l'une des revendications précédentes,
dans lequel l'équerre de montage (46) présente un côté de montage (62) qui est disposé transversalement à la seconde interface (48) de l'équerre de montage (46), et
dans lequel le côté de montage (62) de l'équerre de montage (46) présente un quatrième logement (64) qui est conçu pour recevoir un moyen de fixation pour la fixation de l'équerre de montage (46) à une surface de montage.

13. Module de surveillance de porte de protection (16) selon l'une des revendications 8 à 12, dans lequel le connecteur (66) présente un élément antierreur (102).

14. Système de surveillance de porte de protection (10) comportant :
- une porte de protection (14) servant d'accès à une zone de sécurité,
- un module de surveillance de porte de protection (16) selon l'une des revendications 1 à 13 pour la surveillance d'un état de la porte de protection (14),
- un actionneur (36) et
- une unité de commande (26) qui est configurée pour lire le signal de porte de protection et pour commander une machine ou une installation (12) se trouvant dans la zone de sécurité en fonction du signal de porte de protection.
